# EUROPEAN PATENT APPLICATION

(11) **EP 4 841 444 A1**
(43) Date of publication of application: **18.11.2026**
(21) Application number: 26176168.8
(22) Date of filing: 04.05.2026
(51) Int. Cl.: G06F 9/50, G06F 9/455

(54) **LEARNING-BASED NUMA NODE CAPACITY PREDICTION**

(30) Priority: 13.05.2025 US 202519207034
(71) Applicant: VMware LLC, Palo Alto, CA 94304 (US)
(72) Inventor: Hao, Yifan, Palo Alto, 94304 (US); Zheng, Haoqiang, Palo Alto, 94304 (US); Venkatasubramanian, Rajesh, Palo Alto, 94304 (US); Gadepalli, Phani, Palo Alto, 94304 (US)
(74) Representative: Bosch Jehle Patentanwaltsgesellschaft mbH

(57) **Abstract**

Solutions for predicting capacity of non-uniform memory access (NUMA) nodes. In some cases, the solutions include the measurement of performance values, such as values of processor load and/or processor capacity, of a NUMA node. In some cases, the solutions include predicting the capacity of the NUMA node based at least in part on a model generated from the measured values. In some cases, the model is a dynamic model, and in some cases, the model can be updated based on performance values measured over time.

## Description

### Cross-Reference to Related Applications

This application may be related to U.S. Pat. App. No. --/------, titled, "NUMA Migration Throttling," and filed on a date even herewith by Hao *et al.* (attorney docket no. 5009.240455US01), the disclosure of which is incorporated herein by reference.

### Technical Field

This disclosure relates, in general, to non-uniform memory access (NUMA) computing systems and, more particularly, to predicting capacity of NUMA nodes and/or hosts.

### Background

A NUMA (Non-Uniform Memory Access) system has multiple memory proximity domains, referred to as "NUMA nodes," each of which is a group of processors and memory. In general, a processor's access to memory of its local NUMA node is faster than to memory of remote NUMA nodes. Based on this, existing NUMA policy is designed to maximize memory locality, *i.e.,* maximize the ratio of memory accesses that happen at a local NUMA node in relation to all memory accesses. A NUMA scheduler often handles the placement of virtual machines (VM) and other virtualized computing instances (VCI) on particular NUMA nodes.

One consideration of a NUMA scheduler in placing a VCI on a NUMA node is the capacity (and, in particular the available capacity) of various NUMA nodes in the computer system. Currently, NUMA schedulers often attempt to predict NUMA node capacity based on several factors, among them the nominal frequency of the processor(s) or processor core(s), *e.g*., central processing units (CPU) or CPU cores. This type of deterministic prediction fails to account for the characteristics of modern processors and dynamic loading of NUMA nodes, leading to less precise and/or accurate predictions and resulting imbalance in load across NUMA nodes.

Another consideration when placing a VCI is the concept of locality, which suggests that a VCI should be placed on a NUMA node that provides the best access to memory and/or communication facilities that are used by that VCI.

Current techniques, however, fail to provide sufficiently accurate predictions of the capacity of NUMA nodes to support placement of a VCI, resulting in improper load balancing and otherwise suboptimal performance. Such techniques also often result in migration thrashing, in which a NUMA scheduler migrates a VCI repeatedly, particularly when attempting to optimize VCI locality.

According to an aspect of the invention, a method is provided, comprising:
managing, by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
measuring, by the NUMA scheduler, values of processor load and processor capacity for at least the first NUMA node;
predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
placing, by the NUMA scheduler and based at least in part on the predicted processor capacity of the second NUMA node, a first VCI on the first NUMA node.

Advantageously, the predicted processor capacity of the first NUMA node is a predicted processor capacity of the first NUMA node under circumstances in which the first NUMA node is subject to a predicted load that includes load imposed by the first VCI.

Advantageously:
the dynamic model is one of a plurality of dynamic models, the plurality of dynamic models comprising the first dynamic model specific to the first NUMA node and a second dynamic model specific to the second NUMA node; and
the method further comprises:
   measuring, over a first interval of time, a first plurality of sets of values of processor load and processor capacity of the first NUMA node;
   measuring, over a second interval of time, a second plurality of sets of values of processor load and processor capacity of the second NUMA node;
   dynamically updating the first dynamic model based on the first plurality of sets of values processor load and processor capacity; and
   dynamically updating the second dynamic model based on the second plurality of sets of values processor load and processor capacity.

Advantageously:
the first NUMA node runs on a first one or more hardware processors or hardware processor cores;
the second NUMA node runs on a second one or more hardware processors or hardware processor cores;
the first plurality of sets of values of processor load and processor capacity comprises sets of measured values of processor load and processor capacity of the first one or more hardware processors or hardware processor cores; and
the second plurality of sets of values of processor load and processor capacity comprises sets of measured values of processor load and processor capacity of the second one or more hardware processors or hardware processor cores.

Advantageously:
at least one set of values in the first plurality of sets of values comprises values of processor load and processor capacity measured when the first one or more hardware processors or hardware processor cores is subject to greater than 100% load; and
at least one set of values in the second plurality of sets of values comprises values of processor load and processor capacity measured when the second one or more hardware processors or hardware processor cores is subject to greater than 100% load.

Advantageously, placing the first VCI comprises migrating the first VCI from the second NUMA node to the first NUMA node.

Advantageously, the first dynamic model is a machine learning (ML) model.

According to an aspect, one or more non-transitory computer-readable media are provided having encoded therein instructions executable by one or more processors to perform operations comprising:
managing, by a by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
measuring, by the NUMA scheduler, values of processor load and processor capacity for at least the first NUMA node;
predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
placing, by the NUMA scheduler and based at least in part on the predicted processor capacity of the second NUMA node, a first VCI on the first NUMA node.

Advantageously, the predicted processor capacity of the first NUMA node is a predicted processor capacity of the first NUMA node under circumstances in which the first NUMA node is subject to a predicted load that includes load imposed by the first VCI.

Advantageously:
the dynamic model is one of a plurality of dynamic models, the plurality of dynamic models comprising the first dynamic model specific to the first NUMA node and a second dynamic model specific to the second NUMA node; and
the operations further comprise:
   measuring, over a first interval of time, a first plurality of sets of values of processor load and processor capacity of the first NUMA node;
   measuring, over a second interval of time, a second plurality of sets of values of processor load and processor capacity of the second NUMA node;
   dynamically updating the first dynamic model based on the first plurality of sets of values processor load and processor capacity; and
   dynamically updating the second dynamic model based on the second plurality of sets of values processor load and processor capacity.

Advantageously:
the first NUMA node runs on a first one or more hardware processors or hardware processor cores;
the second NUMA node runs on a second one or more hardware processors or hardware processor cores;
the first plurality of sets of values of processor load and processor capacity comprises sets of measured values of processor load and processor capacity of the first one or more hardware processors or hardware processor cores; and
the second plurality of sets of values of processor load and processor capacity comprises sets of measured values of processor load and processor capacity of the second one or more hardware processors or hardware processor cores.

Advantageously:
at least one set of values in the first plurality of sets of values comprises values of processor load and processor capacity measured when the first one or more hardware processors or hardware processor cores is subject to greater than 100% load; and
at least one set of values in the second plurality of sets of values comprises values of processor load and processor capacity measured when the second one or more hardware processors or hardware processor cores is subject to greater than 100% load.

Advantageously, placing the first VCI comprises migrating the first VCI from the second NUMA node to the first NUMA node.

Advantageously, the first dynamic model is a machine learning (ML) model,
According to an aspect, a system is provided, comprising:
one or more processors; and
one or more non-transitory computer-readable media having encoded therein instructions executable by the one or more processors to perform operations comprising:
   managing, by a by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
   measuring, by the NUMA scheduler, values of processor load and processor capacity for at least the first NUMA node;
   predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
   placing, by the NUMA scheduler and based at least in part on the predicted processor capacity of the second NUMA node, a first VCI on the first NUMA node.

Advantageously, the predicted processor capacity of the first NUMA node is a predicted processor capacity of the first NUMA node under circumstances in which the first NUMA node is subject to a predicted load that includes load imposed by the first VCI.

Advantageously:
the dynamic model is one of a plurality of dynamic models, the plurality of dynamic models comprising the first dynamic model specific to the first NUMA node and a second dynamic model specific to the second NUMA node; and
the operations further comprise:
   measuring, over a first interval of time, a first plurality of sets of values of processor load and processor capacity of the first NUMA node;
   measuring, over a second interval of time, a second plurality of sets of values of processor load and processor capacity of the second NUMA node;
   dynamically updating the first dynamic model based on the first plurality of sets of values processor load and processor capacity; and
   dynamically updating the second dynamic model based on the second plurality of sets of values processor load and processor capacity.

Advantageously:
the first NUMA node runs on a first one or more hardware processors or hardware processor cores;
the second NUMA node runs on a second one or more hardware processors or hardware processor cores;
the first plurality of sets of values of processor load and processor capacity comprises sets of measured values of processor load and processor capacity of the first one or more hardware processors or hardware processor cores; and
the second plurality of sets of values of processor load and processor capacity comprises sets of measured values of processor load and processor capacity of the second one or more hardware processors or hardware processor cores.

Advantageously: at least one set of values in the first plurality of sets of values comprises values of processor load and processor capacity measured when the first one or more hardware processors or hardware processor cores is subject to greater than 100% load; and
at least one set of values in the second plurality of sets of values comprises values of processor load and processor capacity measured when the second one or more hardware processors or hardware processor cores is subject to greater than 100% load.

Advantageously, placing the first VCI comprises migrating the first VCI from the second NUMA node to the first NUMA node.

### Brief Description of the Drawings

Fig. 1 is a block diagram illustrating an exemplary host on which a NUMA system can run, in accordance with various embodiments.
Fig. 2 is a block diagram illustrating an exemplary NUMA system, in accordance with various embodiments.
Figs. 3A and 3B are functional diagrams illustrating the migration of a VCI from a source node to a destination node, in accordance with various embodiments.
Fig. 4 is a functional diagram illustrating a feedback loop for migration throttling, in accordance with various embodiments.
Fig. 5 is a process flow diagram illustrating a method of migration throttling, in accordance with various embodiments.
Fig. 6 is a process flow diagram illustrating a method of predicting capacity of NUMA nodes, in accordance various embodiments.
Figs. 7 and 8 are plots of processor capacity curves, in accordance with various embodiments.
Fig. 9 is a plot of a processor capacity curve illustrating capacity sampling intervals, in accordance with various embodiments.
Fig. 10 is a block diagram illustrating example components of a computer system in accordance with some embodiments.

### Detailed Description

NUMA is a very common computer architecture in modern data center hardware. As outlined above, a NUMA system often comprises different groups of central processing unit (CPU) (or other processor) cores. In some cases, CPU cores of one group access part of the system's dynamic random access memory (DRAM) faster than accessing a different part of DRAM. Each group can also have different latency when accessing communication facilities, such as a small computer systems interface (SCSI), network interface card (NIC) and graphics processing unit (GPU). Each group is organized into a NUMA node. Intelligently deciding on which NUMA node a virtual computing instance (VCI) such as a virtual machine (VM) should run is a hard problem, and is a core functionality of almost all modern operating system (OS) schedulers and/or NUMA schedulers. Due to the complexity of the problem, it is often found that a scheduler can make wrong or sub-optimal decisions when scheduling (e.g., placing or migrating) a VM. In such a case, the scheduler will need to correct the scheduling decision later by performing another placement (e.g., a migration), in which the VCI will be moved from one NUMA node to another node.

A set of embodiments provides solutions to the problem of excessive migration (referred to herein as "thrashing") of VMs and other VCIs between NUMA nodes. In some embodiments, a migration damper (or "thrashing damper") can prevent migration of a particular VCI if migration thrashing has been detected. The migration damper, in some embodiments, can prevent subsequent migration of such a VCI, for example, until the expiration of a cooldown period. In some embodiments, a NUMA scheduler can employ a feedback loop to determine when a migration damper is appropriate.

Further, some embodiments provide capacity prediction tools that can allow more precise and/or accurate prediction of NUMA node capacity, which can improve VCI placement and/or migration performance. For example, as noted above, inaccurate capacity prediction can result in load imbalance among NUMA nodes, and certain embodiments can reduce the inaccuracies in capacity predictions, e.g., by dynamically learning the capacity of different NUMA nodes. In an aspect, certain embodiments can observe processor load in conjunction with processor consumption to build a learning model of the capacity of a particular processor (and/or cores of that processor), enabling more accurate capacity prediction for NUMA nodes occupying that processor.

### Exemplary Environments

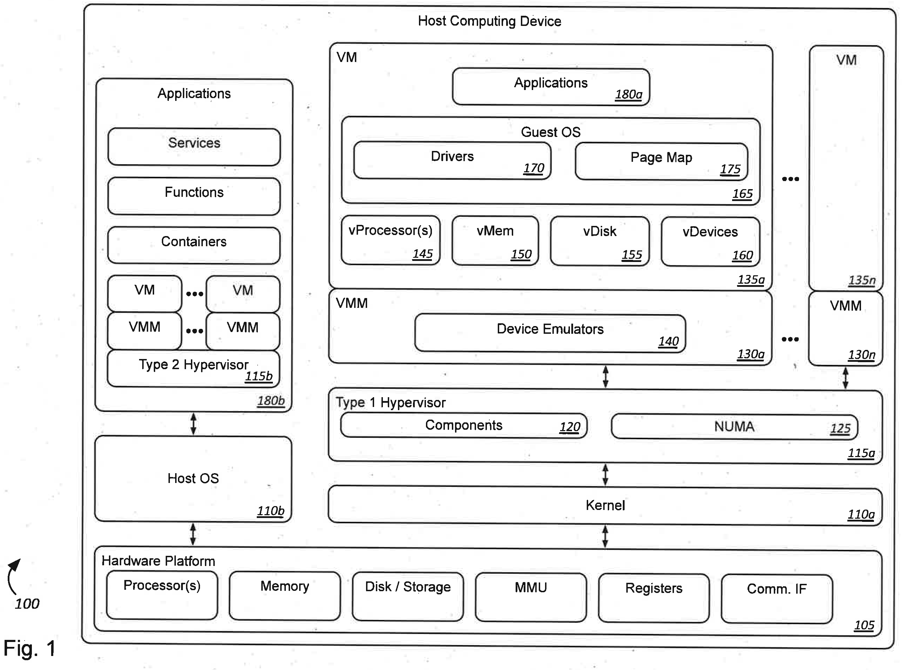

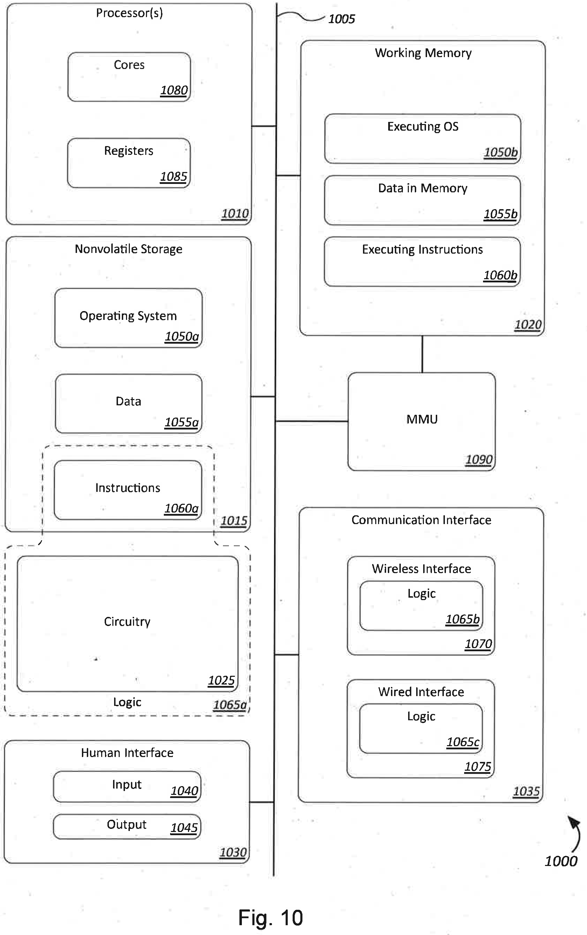

Fig. 1 illustrates a host computing device 100 (also referred to herein merely as a host computer" or merely a "host"). The host 100 includes a hardware platform 105; an example of a hardware platform is as an x86 architecture platform, an ARM architecture platform and/or any other suitable workstation or computer. Architectural examples of host devices 100 and/or hardware platforms 105 in accordance with some embodiments are described in further detail below in the context of Fig. 10. Merely by way of example, the hardware platform 105 may include one or more processors (each with one or more cores and a set of registers), system (working) memory, a memory management unit (MMU), one or more communication interfaces, and/or one or more user interface devices, all of which are described in further detail below. These components can operate in a conventional manner and/or can be controlled and/or managed as described further herein. In a general sense, a host computing device 100 can comprise any computer and/or system that can support the features and operations described hereinafter.

In some embodiments, a virtualization layer is installed on the hardware platform 105. As used herein, the term "virtualization layer" refers broadly to any hardware, firmware and/or software technology (or combinations thereof) that enables the creation of virtual versions of computing resources. Such virtual resources include, without limitation, operating systems, storage devices, networks, and hardware platforms. In some embodiments the virtualization layer abstracts the underlying physical resources (such as hardware platform 105) of the host 100, effectively creating a layer of separation between the physical resources and the software that uses those resources.

In an aspect, therefore, the virtualization layer can serve as a hardware abstraction layer (HAL), and those terms are used synonymously herein unless the context dictates otherwise. In some embodiments, the virtualization layer might run on an operating system (OS) kernel 110a and/or might include such a kernel 110a, which can provide accessibility to the underlying hardware platform. An example of a virtualization layer or HAL, in accordance with some embodiments, is a hypervisor 115a illustrated by Fig. 1, although embodiments are not so limited. In some embodiments, a hypervisor 115 (or other virtualization layer) can include components 120 that can provide additional functionality. One example of such components 120 is a vSAN component, described in further detail below. Another example is a virtual network component, which is also described in further detail below. These components 120 might be built into a hypervisor 115 and/or might be separate (e.g., as software modules that can be loaded as needed or at startup by the hypervisor 115). Regardless of the architecture, such components are referred to herein as "modules," and this term therefore should be interpreted broadly to include any functionality of the hypervisor 115, regardless of whether such functionality is incorporated within the hypervisor 115 itself or loaded separately.

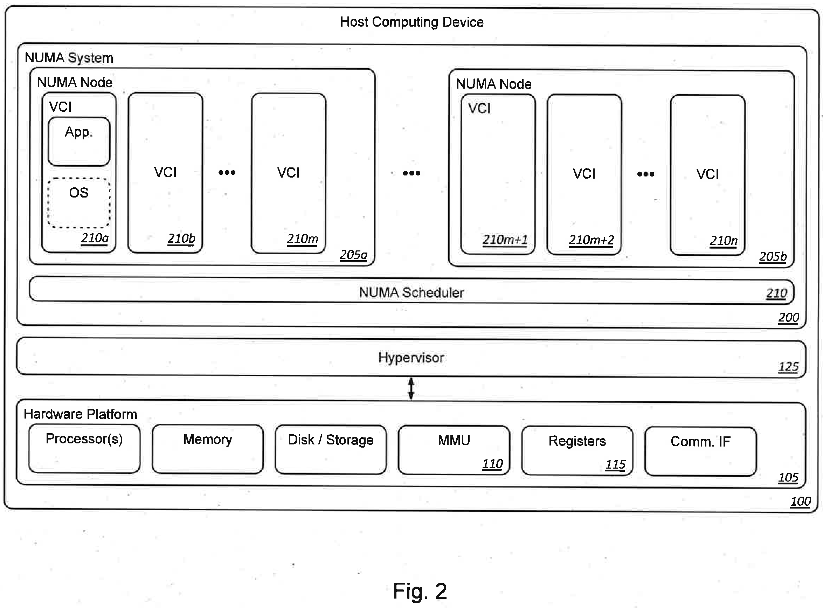

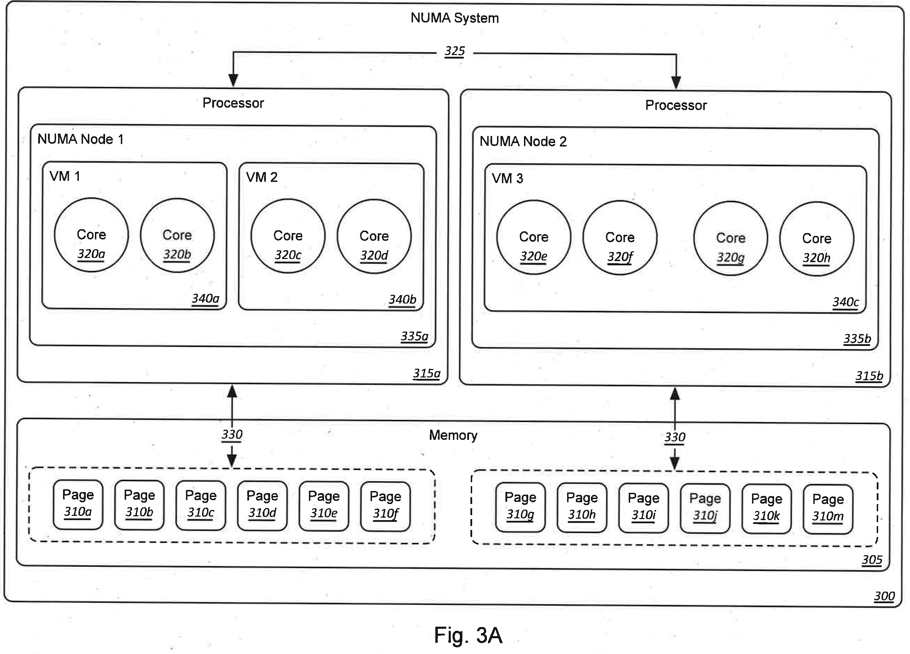

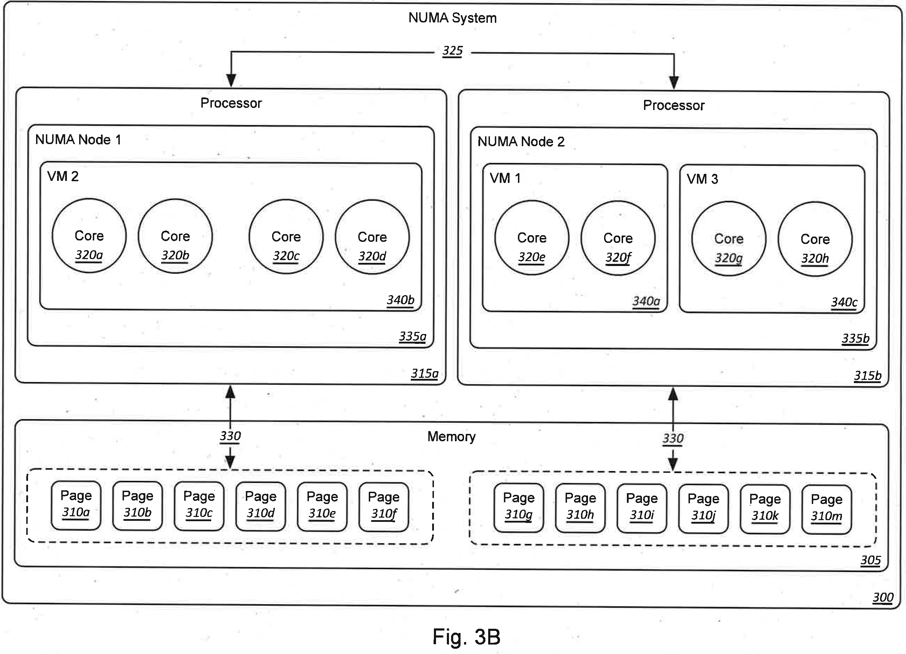

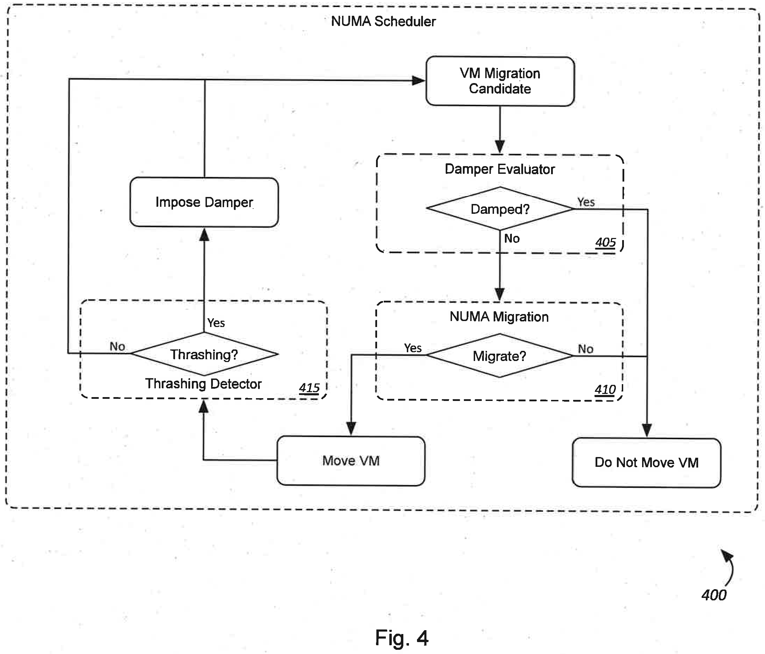

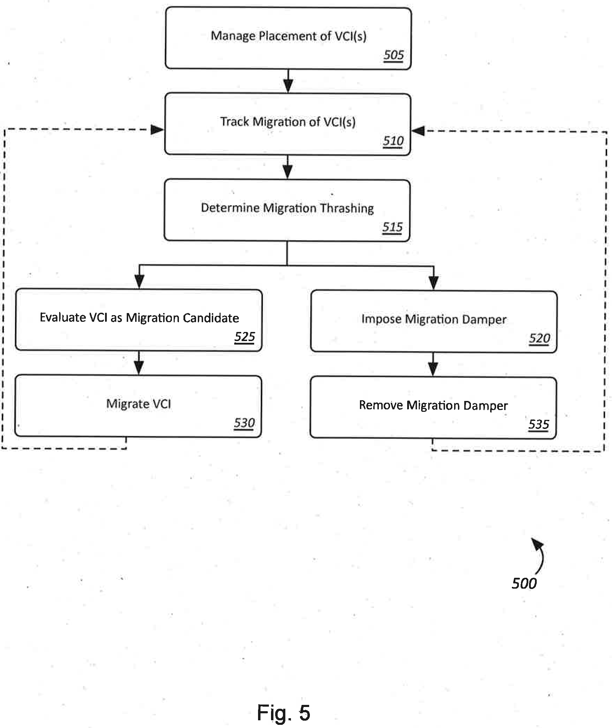

In some embodiments, the hypervisor 115 can also include a NUMA module 125, which can support and or manage a NUMA system, such as the NUMA systems described below in the context of Figs. 2, 3A, and 3B described in further detail below. In particular embodiments, the NUMA system can include a NUMA scheduler, e.g., the NUMA scheduler described functionally below in the context of Fig. 4. In some embodiments, the NUMA scheduler can perform some or all of the procedures described below in conjunction with Figs. 5-9. In some cases, a NUMA scheduler can include the functionality of an OS scheduler and/or CPU scheduler, and in accordance with various embodiments, the term "NUMA scheduler" is used broadly to include a dedicated scheduler of the NUMA system and/or any separate CPU and/or OS scheduler executing on a host. The division of responsibility between such devices can differ according to implementation, and, unless expressed otherwise herein, operations performed by any such scheduler can be considered operations performed by the NUMA scheduler for purposes of this disclosure. The NUMA scheduler therefore can comprise any combination of software instructions, firmware instructions, and/or hardware circuitry that is capable of scheduling workloads on NUMA nodes, migrating such workloads, throttling migration, measuring capacity and/or load, and/or otherwise performing as described herein. In some embodiments, the NUMA scheduler might comprise executable source code that implements one or more algorithms, models, data structures, etc. to perform the described functionality, including without limitation various operations, methods, and/or algorithms illustrated in the accompanying drawings and/or described herein.

In some embodiments, the virtualization layer comprises and/or incorporates the functionality of one or more virtual machine monitors (VMM) 130a, ... 130n, which are described in further detail below. In some embodiments, as shown in Fig. 1 for example, the virtualization layer includes a VMM 130 for each respective VM 135 supported by the virtualization layer. There generally are two types of hypervisors: Type 1 (Bare-Metal) Hypervisors 115a, examples of which include VMware ESXi and Microsoft Hyper-V Server, which run directly on the physical hardware platform 105 of the host 100 without requiring an underlying host OS (other than, in some embodiments, a kernel 110a, which can be separated from and/or integrated with the hypervisor 115a depending on the embodiment); and Type 2 (Hosted) Hypervisors, *e.g*., hypervisor 115b, examples of which include VMware Workstation and Oracle VirtualBox, which run on top of an OS 110b of a host and use the kernel of the host OS 110b to interact with the hardware platform 105. .

This abstraction allows multiple virtual computing instances (VCI) to run simultaneously on a single physical machine, each behaving as if it had exclusive access to its own hardware. The terms "virtual computing instances" and "VCI" are used broadly herein to refer to any type of virtualized computational functionality, storage functionality, network functionality, and/or the like. Examples of VCls can include, without limitation, virtual machines (VM) 130, which often include their own operating systems (OS) (referred to as "guest operating systems") and applications; containers, which often share an OS kernel with the host and isolate applications within their own filesystem, libraries, and configurations and frequently run on orchestration platforms, such as Docker(TM), Kubernetes(TM), and/or the like; virtualized processes and/or services, for example using namespaces, which can provide serverless computing and/or microservices architectures and instances; virtualized desktops infrastructures (VDI), application virtualization; network function virtualization (NFV); storage virtualization, such as storage area networks (SAN) and vSANs; cloud instances, which can include VMs, containers, serverless function, and other abstracted compute units. In some cases, VCls can be stacked; for example, the guest OS of a VM might serve as the host OS kernel for a container and/or might host (and/or provide namespaces for) one or more serverless functions, virtualized functions, microservices, etc. Unless specified otherwise herein, such stacked VCls can be considered a single VCI for purposes of this disclosure. While this disclosure discusses VMs primarily, the skilled artisan should appreciate that the discussion and functionality provided by various embodiments can apply equally to other types of VCls, including without limitation those mentioned above, unless the context clearly indicates otherwise.

As shown by Fig. 1, in some embodiments, a hypervisor (with supported VMMs and VMs), as well as containers, functions, services, etc. might run as applications within a host OS, although the skilled artisan will appreciate that other arrangements are possible in accordance with various embodiments. As shown in Fig. 1, VCls can run on a virtualization layer (*e.g*., the Type I hypervisor 115a) independent of a host OS 110b, or on a virtualization layer (*e.g*., the Type II hypervisor 115b) within the environment of the host OS 110b, as an application, function, service, container, etc. (with or without an independent virtualization layer, orchestration system, etc.) within the environment of the host OS 110b, or otherwise as known to a skilled artisan. It should be noted that the various VCls described above and/or illustrated by Fig. 1 are exemplary in nature, and no particular embodiment need include all (or any subset of) the illustrated and/or described VCIs.

As noted above, the virtualization layer (which can include, in some embodiments, the hypervisor(s) 115, VMMs 130a, ... 130n, and/or any other necessary or appropriate hardware, firmware, and/or software) can support one or more of these VCls, such as virtual machines (VM) 135a,...135n), which can be concurrently instantiated and/or executed on the host 100. In some embodiments, a VMM 130 can be embodied by a thin piece of software that runs directly on the hardware platform 105 (and, in many cases is coordinated and/or managed by the hypervisor 115a); in an aspect, a VMM 130 can virtualize some or all of the physical resources of the hardware platform 105. Among other components, therefore, the VMM often includes device emulators 140, which can provide emulated analogs of the physical components of the hardware platform 105. In particular, the device emulators can include a virtual bridge, which can provide an interface between virtual NICs in various VMs 135 and the physical network hardware of the host 100.

A VMM 130 also often tracks and either forwards (*e.g*., to the hypervisor 115a, kernel 110, and/or host OS 110b) or itself schedules and handles all requests made by its respective VM 135 for physical resources, as well as various faults and interrupts. Although the VM 135 (and thus the user of the VM 135) often cannot detect the presence of the VMM 130, the VMM 130 and the VM 135 are typically an operational unit and may be viewed as together forming a single virtual computer; thus, the term "virtual computer" is used broadly herein to describe any combination of VCI and underlying virtualization technology (such as a VMM) that can function as an independent compute entity running on the hardware platform 105 of the host, with or without the presence of other virtual computers running concurrently.

In some embodiments, the VMM 130 (and/or the hypervisor 115) is co-resident at system level with a host operating system 110b, in some embodiments, both can modify the state of the host processor(s) independently and/or in coordinated fashion. The virtual computer in such a configuration is thus fully hosted in that it runs on an existing host hardware platform together with an existing host OS. In other implementations, a dedicated kernel 110a takes the place of and performs the conventional functions of the host OS 110b, and virtual computers run on the kernel 110a. FIG. 3 illustrates both a kernel 110a and a host OS 110b for the sake of comprehensiveness, although many embodiments can include only one or the other. In some embodiments, the hypervisor 115 can act as the interface between the virtual computers and the kernel 110a, host OS 110b, and/or hardware platform 105. As noted, in some systems, the hypervisor 115 can incorporate, replace, coordinate, and/or perform the functions of the VMMs 130, and in still others, the functions of the hypervisor are performed by the kernel 110a itself. Again, both are shown merely to provide a comprehensive explanation. The scope of various embodiments does not depend on any particular VCI/VMM/hypervisor/kernel/OS configuration, so long as the implementation is able to perform the functions required by such embodiments (*e.g*., as described in further detail below).

Based on the disclosure above, the skilled artisan will appreciate that the virtualization layer can provide an isolated operating environment for each VM 135 (or other VCI), such that the OS and/or applications in each VM and maps physical resources of hardware platform 105 (*e.g*., processor, memory, network communication interface, and/or user interface devices) to "virtual" resources of each of VMMs 130, which provides each VM 135 with its own virtual hardware platform, with each virtual hardware platform having its own emulated hardware. Examples of such virtual hardware can comprise one or more virtual processors 145 (which can comprise virtualized versions of any of the processors described herein (*e.g*., virtual CPUs (vCPU)), a virtualized memory 150, virtualized storage 155 (such as a virtual disk image, an example of which is a virtual machine disk (VMDK), and or storage supplied by a vSAN), and/or other virtualized devices and/or components 160, which can include one or more virtualized network interface cards (VNIC) or the like, one or more virtualized user interface devices and other virtualized or emulated I/O devices). The hypervisor 115, in some embodiments, can manage (*e.g*., monitor, initiate, and/or terminate) execution of VMs 135 according to policies associated with hypervisor 115, such as auto start, auto restart, etc. policies. Additionally, the hypervisor 115 can manage execution of the VMs, *e.g*., based on requests received from a device other than the host 100. For example, a hypervisor 115 might receive commands, *e.g*., from a management device or system and/or via a network connection, that specifies that the hypervisor 115 should start, stop, and/or suspend a particular VM 135, which VMDK file to use to instantiate a particular VM 135, how a particular VM 135 should be configured and/or operated, etc.

In some examples, the virtualized storage 155 (*e.g.,* a VMDK) can reside on local storage of the host 100 and/or on shared storage (*e.g*., storage provided by a SAN and/or vSAN, for example as discussed in further detail below). When a VM 135 is terminated and/or suspended, the contents of the system memory and/or other operational parameters of the VM can be stored to the VMDK (or another file), to retain the state of the VM 135. In an aspect, a virtual disk image can represent a file system (*e.g.,* a hierarchy of directories and files) used by VM 135, in a single file or in a plurality of files, each of which might include a portion of the file system. A VM 135 often will execute a guest OS 165, which can include device drivers 170 corresponding to the virtualized components 145-160 of the VM. The guest OS 165 generally will also include a page map 175 (a specific implementation of which can be a page table), which is described in further detail below.

In many embodiments, the VMs 135 often will execute applications 180a. By nature, a VM 135 typically can run the same types of applications 180a as those applications 180b that execute natively on a host OS 110b (assuming that the host OS . 110b and the guest OS 165 of the VM 135 are the same or support the same applications). In an aspect, a virtualization system, such as a Type 2 hypervisor 115b and the VMMs/VMs supported by that hypervisor 115b, can often be run as an application 180, either natively on a host OS 110b or as a stacked VCI within a VM 135 or other VCI. Other types of VCls, including without those described above (such as containers, microservices, serverless functions, etc.) can run on a host OS 110b as well, although the nature of that host OS 110b might vary (*e.g*., some serverless functions might run within a runtime environment on a lightweight Linux distribution or in a container that uses a kernel of the host OS 110b along with an orchestration platform, etc.)

As noted above, in some embodiments, the hypervisor 115 can include a vSAN component or module, which can enable the hypervisor 115 to provide vSAN capabilities. For example, the vSAN module can aggregate local storage devices, such as SSDs and HDDs, from a plurality of hosts (which can include, but need not include, physical storage resources of the host 100) into a unified storage pool. A hypervisor 115, *e.g*., running a vSAN module or incorporating similar functionality) can treat the host's own storage resources, and/or those of other hosts in some cases, as a single entity, which can simplify storage management and provisioning. In some embodiments, the vSAN module can intelligently manage the placement of VM data (including without limitation VMDKs) across the available storage devices to ensure optimal performance and redundancy. Further, by virtualizing the underlying storage resources in accordance with some embodiments, the vSAN module can abstract the physical storage infrastructure from the VMs (similarly in some ways to the general abstraction of the hardware platform 105 provided by the virtualization layer itself). This abstraction enables the creation of virtual volumes that can be assigned to different VMs 135 regardless of the physical storage devices used. The vSAN module can also handle the mapping between the virtual volumes and the physical storage, providing a consistent and simplified storage interface for the VMs 115.

As noted above, the components 120 employed by the hypervisor 115 can include virtual networking components. The simplest example of such a virtual networking component is a virtual bridge that provides connectivity, much like a physical bridge in a local area network (LAN), between a plurality of physical and/or virtual network interfaces, including without limitation the physical communication interfaces of the host's hardware platform 105 and the virtual network interface(s) (e.g., vNICs) of each VM 135. In some embodiments each virtual network interface of each VM 135 might be assigned a unique virtual media access control (MAC) address that enables the virtual bridge to simulate the forwarding of incoming data packets among the VMs and between the VMs and the host's physical network hardware.

The virtual networking components of some embodiments can provide further functionality. Merely by way of example, in some embodiments, the hypervisor 115 might implement one or more virtual switches and/or virtual routers. In an aspect, a virtual switch can act as the first hop for traffic originating from a VM 135 (and/or the last hop for traffic addressed to a VM 135); a virtual switch can be responsible for forwarding packets between VMs 135 on the same host and/or between those VMs 135 and other hosts (*e.g*., via the physical networking interface of the host 100). In some embodiments, virtual switches emulate the functionality of traditional physical switches but can provide added flexibility and programmability, with features such as port mirroring, which enables a virtual switch to mirror traffic from one port to another for monitoring and/or analysis purposes; quality of service (QoS), which can include enforcement of QoS policies to prioritize different types of traffic and ensure optimal network performance; security policies, such as firewall rules and access control lists, to traffic passing through them; and/or Layer 2 forwarding, *e.g*., based on physical or virtual MAC addresses.

Similarly, virtual routers include software-based routing entities that can be operated by a hypervisor 115 or in other environments. Virtual routers can be responsible for routing traffic between different subnets and networks, including traffic between VMs on the same host and traffic destined for external hosts and/or networks. Virtual routers can provide the same routing functionality as physical routers but advantageously can be easily scalable and/or configurable. Virtual routers can run various routing protocols, *e.g*., shortest path first (OSPF) and border gateway protocol (BGP), and/or can dynamically learn network routes and forward traffic efficiently. Virtual routers can also provide Network Address Translation (NAT) and firewall services to manage traffic flows and enforce security policies among VMs 135 and/or between VMs 135 and external physical or virtual devices (*e.g.,* VMs on a different host). In some embodiments, virtual routers can implement policy-based routing to control how traffic is forwarded based on specific criteria, such as source IP address or application type. Virtual routers also can perform Layer 3 forwarding based on IP addresses and routing tables.

In some embodiments, the host 100 might operate within an environment that includes a software defined network (SDN), and/or the virtual networking components of the hypervisor can participate in and/or form a portion of the SDN. A SDN often will include at least a data plane and a control plane. The data plane, also known as the forwarding plane, is responsible for the actual movement of network traffic. It deals with the transmission of packets and frames between network devices. In a traditional network, physical switches and routers handle the data plane tasks. In an SDN environment, virtual switches and virtual routers take on these responsibilities within virtualized environments. Although virtual switches and virtual routers generally operate in the data plane, they are heavily influenced by the control plane in an SDN architecture. In some embodiments, the control plane is responsible for managing and configuring network behavior, and it communicates with the data plane components to enforce network policies and rules. For example, a SDN controller (which can be embodied as a standalone appliance, run as a VM 135 and/or integrated within a hypervisor 115, among other possibilities) resides in the control plane. In an aspect, the SDN controller configures flow tables of virtual switches. The SDN controller can also determine how traffic should be handled based on network policies, security rules, and other criteria, and can configure virtual switches accordingly. The SDN controller also can manage routing information for virtual routers, for example, by distributing routing tables, configures routing protocols, and/or enforcing routing policies to ensure that traffic is forwarded correctly and efficiently. Thus, the control plane provides a centralized point of management for the entire SDN. Network administrators can define and modify network policies, troubleshoot issues, and monitor network performance through the SDN controller, which then propagates these changes to the virtual switches and routers in the data plane.

In many embodiments, the control plane also comprises logical switches and logical routers. While virtual switches and routers generally are analogous to physical switches and routers, respectively, in the SDN data plane, logical switches generally are abstract representations of switches that exist in the SDN control plane. They are created and managed by the SDN controller, which provisions and configures the logical switches based on network policies and requirements. Logical switches can span multiple physical and virtual switches, enabling seamless connectivity and management across the entire network; thus, a virtual switch in a hypervisor can serve as part of a logical switch. Logical switches allow management of multiple physical and/or virtual switches as a single entity, simplifying network management and troubleshooting. In some embodiments, logical switches can be dynamically created, modified, and deleted based on changing network conditions and requirements. Logical switches can also enforce network policies, such as virtual LAN (VLAN) assignments and access control lists, across all connected switches. In some embodiments, logical switches can support multi-tenant environments by providing isolated network segments for different tenants or applications.

Similarly, logical routers abstract representations of routers that exist in the SDN control plane. Like logical switches, they can be created and managed by the SDN controller, which can provision and configure the logical routers based on network policies and requirements. Logical routers can span multiple physical and virtual routers, enabling centralized routing management and flexible network segmentation. In some embodiments, logical routers allow management of multiple physical and/or virtual routers as a single entity, simplifying routing configuration and management. In some embodiments, logical routers can connect different network segments, including physical and/or virtual networks, enabling seamless communication between them. Logical routers, in some embodiments, can also implement policy-based routing to control how traffic is forwarded based on specific criteria, such as source IP address or application type and/or can support multi-tenant environments, *e.g*., by providing isolated routing domains for different tenants or applications.

A SDN can be viewed as an overlay network on top of an underlay network. The underlay network forms the physical foundation of the network infrastructure. It consists of the physical network devices, such as switches, routers, and links, that provide the actual transport medium for network traffic. The underlay network is responsible for transporting data packets from one point to another within the network. It is typically based on traditional networking technologies and protocols, such as Ethernet, IP, and MPLS. The overlay network is a virtual network that is built on top of the underlay network. It provides an abstracted view of the network that is decoupled from the physical infrastructure. The overlay network is responsible for implementing network services and policies, such as virtual networks, security, and quality of service (QoS). It achieves this by encapsulating network traffic and tunneling it through the underlay network.

Virtual switches and routers, in some aspects, are analogs of physical devices and thus can be considered components of the underlay network, as they are directly integrated with the physical infrastructure and handle traffic forwarding within the underlay network. They provide local network control and services for the hosts and network segments they serve, interacting with physical network devices and participating in the underlay network's routing and switching functions. Conversely, logical switches and routers often are abstracted entities that exist in the overlay network, providing a higher level of abstraction and control over the network's virtualized components. They often are managed by the SDN controller and provide centralized network control, enabling the definition of network policies and services across the entire network.

In some embodiments, the host 100 (and the VCls hosted by the host) operates in a software-defined data center (SDDC) environment, which can feature a SDN, *e.g*., as described above. In an aspect, a SDDC provides the functionality of a traditional, hardware-centric data center in a fully software-controlled environment. In some embodiments, a SDDC integrates some or all aspects of data center infrastructure-compute, storage, networking, and security-into a cohesive, flexible, and highly automated platform, which can provide enhanced agility, scalability, and efficiency, making it ideally suited for modern cloud-based and enterprise computing needs. In some embodiments, a SDDC extensively employs virtualization technologies, such as those described above. The abstraction provided by such virtualization allows for the dynamic allocation and reallocation of compute, storage, network, and other resources based on workload demands. In some aspects, for example, a SDDC can provide software-defined compute, which can pool compute resources and/or manage those resources a single, unified resource pool, eliminating the need for rigid, siloed hardware deployments and enabling efficient resource utilization. In some embodiments, a SDDC can provide software-defined storage, which can leverage storage virtualization to abstract physical storage resources into a virtual storage layer, such as a vSAN as described above. This layer presents a unified storage pool that can be easily managed and scaled. An SDDC and/or vSAN can also provide advanced data services such as replication, snapshotting, and deduplication, which are applied at the software layer rather than relying on proprietary hardware features.

An SDDC can also provide network virtualization, which can include but is not limited to a SDN, as described above. More broadly, an SDDC can implement virtual networks that can be dynamically configured and managed independently of the physical network infrastructure, along with policy-based management, in which network policies, including without limitation security rules, QoS, and traffic shaping, are defined and enforced at the software layer, providing granular control over network behavior. Virtual network functions (VNF) which can run on various virtualization layers, such as within a VM, on NFV platform, etc., can be employed by SDDCs; in such cases, various network functions can be performed by virtual or logical devices, including without limitation VCls. In some embodiments, a SDDC can include software-defined security, such as an integrated security fabric that can incorporate a comprehensive security framework spanning the entire data center, which can include network security, data security, and endpoint security, all of which can be managed through centralized policies. In some embodiments, security policies can be applied at a granular level, enabling micro-segmentation of the data center, which can enhance security by limiting lateral movement within the network and protecting against internal threats.

In some embodiments, an SDDC can provide a centralized management platform that oversees all aspects of the data center infrastructure. Such a platform can enable the automation of provisioning, configuration, and lifecycle management tasks. In some embodiments, an SDDC employs automated workload placement algorithms to optimize resource allocation, ensuring that workloads are placed on the most appropriate resources based on performance, capacity, and policy requirements. In some aspects, an SDDC can be designed to support hybrid and multi-cloud environments, enabling seamless integration with public cloud services. This allows an enterprise or service provider to leverage the benefits of cloud computing while maintaining control over data center operations. In other aspects, a SDDC provides support for containerization technologies and microservices architectures (*e.g*., as discussed above), which enables the deployment of modern, cloud-native applications within the SDDC.

The techniques and functionality described herein, *e.g*., the techniques described below in the context of Figs. 5-9, can be performed within a variety of environments, including without limitation the environments described above. Further of alternative environments in which these techniques can be performed, in accordance with various embodiments, include US Patent Nos. 9,465,669, 10,255,091, and 11,340,945 (the "Incorporated Patents") and US Pub. App. No. US 2023-0376359 A1 (the Incorporated Application), the disclosures of which are incorporated herein by reference. The Incorporated Patents describe NUMA systems and schedulers that perform such techniques in the environments described therein and/or in conjunction with the techniques described therein. In some embodiments, the NUMA system 125 and/or the NUMA scheduler can include components and/or functionality of the NUMA systems and NUMA schedulers disclosed by the Incorporated Patents.

In some embodiments, the techniques and functionality described herein can be applied in a cluster environment, for example the environment described in the Incorporated Application. As described further in the Incorporated Application, a cluster can comprise a plurality of hosts (*e.g*., hosts such as the host 100 of Fig. 1) and include a storage cluster (*e.g*., a vSAN cluster), a compute cluster, and/or the like. The various physical hosts of a cluster can be located in a single facility or can be located in a separate geographical location. In some embodiments, multiple clusters can be located in a single physical facility, and additional clusters can be located in physical facilities in one or more separate geographical locations. In some cases, an SDDC can comprise multiple clusters and/or cluster(s) in different physical facilities. The devices in the clusters can include any number of physical machines, NUMA nodes, and/or virtual machines.

Features typically provided by a cluster include, without limitation, scalability and load balancing, both within a single cluster and between multiple clusters. In some embodiments, as described in the Incorporated Application, workload distribution within a cluster can be performed by a cluster scheduler, while workload distribution between different clusters can be handled by a cluster load balancer. The techniques described herein can be performed, in certain embodiments, by a cluster scheduler and/or a cluster load balancer, *e.g.,* to more accurately predict capacity of hosts, NUMA nodes, etc. within a cluster and/or within a plurality of clusters. It should be recognized however, that components and/or devices other than a cluster scheduler and/or load balancer can perform such operations as well.

### Memory Management

In a non-virtualized context, processes (which can include processes of the OS and/or applications) running on a computer generally access system memory using virtual memory addresses, which provides greater addressing flexibility than the physical addresses used by the computer hardware. The OS uses a page map to translate virtual memory addresses used by a process into physical memory addresses that actually store the data, etc. to which the process requests access. The virtual address space often is divided into fixed-size blocks referred to herein as pages, and the physical memory often is divided into corresponding blocks referred herein as frames. The page map maps each virtual page to a physical frame (also sometimes referred to as a "physical page"), enabling the MMU to locate the correct physical memory location for a given virtual address. A page map entry might comprise a page frame number (PFN), which specifies the physical frame to which the virtual page is mapped; a valid bit, which specifies whether the virtual page is currently in memory or not; access permissions, which define the access rights for the page, such as read-only, read/write, or execute permissions; and/or other data, such as a dirty bit, accessed bit, etc., depending on the implementation.

The MMU often uses a translation lookaside buffer (TLB), which can be a hardware cache that stores recently used page map entries. In some embodiments, when the MMU needs to translate a virtual address, it first checks the TLB. If the entry is found (a TLB hit), the translation can be completed quickly. If the entry is not found (a TLB miss), the MMU usually will reference the page map in memory to perform the translation, which is a slower operation. Generally, the MMU handles translating virtual addresses to physical addresses using the page map and/or TLB; managing the TLB; and handling page faults, usually by communicating the page fault to the OS. The OS typically handles constructing and maintaining the page map; allocating physical memory frames to virtual pages and performing related updates to the page map; and fault handling (*e.g*., by loading the missing page into memory, updating the page map, and instructing the MMU to retry the translation) after receiving notification from the MMU.

In some embodiments, virtualized computer systems, such as the hypervisor 115a, VMM 130a and VM 135a (collectively) running on the host 100 often add an additional level of indirection. For example, a request issued by a process within the VM 135 for a virtual page might be remapped twice in order to determine which frame of the hardware memory is intended. This is because the guest OS 165 (generally needing no awareness that it is running in a VM 130) might assume that a given physical page number refers to an actual hardware frame (page), but in many embodiments, it does not. Instead, in some embodiments of a virtualized system, the guest OS 165 can maintain its own page map 175, which maps a virtual page number (in the context of the VM 135) to a "physical" page number (in the context of the VM 135), which is actually a virtualized physical frame (page) number, *i.e.,* a virtualized physical memory space.

The guest OS 165 thus operates as though this "physical" page number refers to actual physical frame (page) number in the hardware platform 105, when it actually is virtualized (like other resources of the hardware platform 105), in this case by the virtual MMU (which can be one of the device emulators 140) that performs mappings of the virtual page numbers to the virtualized "physical" page numbers, and the guest OS 165, as mentioned, can maintain its own page table or map 175 reflecting these mappings. The actual physical frame number of the hardware memory is sometimes referred to as a machine page number, and the virtualization layer, *e.g*., the hypervisor 115a and/or the VMMs 130, provides mappings between each VM's virtualized physical page numbers and the machine page numbers. In some embodiments, the virtualization layer might maintain its own page table (not shown), separate from the VM's page table 175, that maps virtual page numbers to the machine page numbers (hardware memory frames), so that the hardware MMU can translate a VM's virtual page numbers directly to machine page numbers (hardware memory frames).

### NUMA Systems

As mentioned above, in some embodiments the host 100 can employ a virtualized NUMA system (represented generally on Fig. 1 with reference numeral 125). As a general matter, NUMA systems provide enhanced scalability, as they can support multiple NUMA nodes, each of which can include, *e.g*., a multi-core CPU, a local memory controller and local RAM. NUMA nodes often are linked through high-speed interconnects. The motivating principle behind NUMA systems, however, is locality.

Generally, two types of locality can be considered in the context of NUMA systems. The first type of locality is memory locality, in which data and the instructions that operate on that data are maintained close together in memory, *e.g*., in physical address pages (*e.g*., physical frames or pages) that are near one another. The second type of locality is communication locality, in which the memory assigned to each node ideally stores the information most needed by the processor cores in that node (and/or the VCls running on those cores) and thus will be "local" to that node. Together, memory and communication locality enables memory to be accessed, and the information stored in the memory to be used more quickly, often using a bus associated with each respective node. Information stored in the memory associated with other nodes is "remote," in that it can be accessed, but not as quickly as local memory. The use of interconnect can mitigate this disadvantage in some respects, but generally local memory will almost always be "faster" than remote memory.

NUMA systems can be run in virtualized environments as well, for example on a host (such as the host 100 of Fig. 1 to name an example) or across a plurality of such hosts. In a NUMA system running in a virtualized environment (referred to hereinafter merely as a "NUMA system"), the virtualization layer (*e.g*., a hypervisor 115) is responsible for scheduling a set of virtual processors (*e.g*., virtual CPUs, referred to as vCPUs) across the available physical processors and distributing execution time on the virtual processors among various processes. (It should be noted that, while the discussion below of NUMA systems refers to vCPUs in the interest of brevity and simplicity, embodiments are not limited merely to CPUs but can provide NMA functionality using any type of processor, including without limitation those described elsewhere herein, that can offer appropriate functionality to support a NUMA system.) In the context of virtualization, the term "NUMA client" is used herein to refer to a group of vCPUs in a virtual machine that are managed by a NUMA system as a single entity. Virtual CPUs may be grouped into physical NUMA nodes, similarly to physical processor cores.

Fig. 2 illustrates a virtualized NUMA system 200, which in some embodiments can run on a host such as the host 100 (and/or a plurality of such hosts). For the sake of simplicity, Fig. 2 omits much of the detail of Fig. 1 and represents the NUMA system 200 as separate from the hypervisor 115, but it should be appreciated that the architecture of Fig. 1 can be employed by the host 100 of Fig. 2 and that the NUMA scheduler 200 might be incorporated within the hypervisor 115 and/or other virtualization layer components.) The NUMA system 200 comprises a plurality of NUMA nodes 205, each hosting one or more VCls 210 (which can include, but are not limited to, VMs). Virtualized NUMA systems typically prioritize memory locality much like non-virtualized NUMA systems. A skilled artisan will appreciate, however, that one advantage of virtualized systems is the ability to migrate VCIs 210 between different hosts (and/or in the case of a virtualized NUMA system, between different NUMA nodes 205). A virtualized system might perform VCI migration for a variety of reasons, including without limitation load balancing, failover, and/or the like. A virtualized NUMA system might also perform a particular type of migration, referred to herein as "NUMA migration, for example, in order to maintain, increase, and/or optimize memory locality for VCIs 210 running on various NUMA nodes 205.

Merely by way of example, Fig. 3A illustrates an exemplary virtualized NUMA system 300 running on a host (such as the host 100, to name one example) that includes a memory 305 (*e.g.,* a working memory or system memory of a host such as the host 100) that comprises a plurality of physical memory frames (referred to for simplicity on Fig. 3A as "pages") 310. In the illustrated embodiment, the host comprises two processors 315, each with four cores 320. Each processor is in electrical communication with the memory 305 via a memory bus 330, and each processor 315 has a set of local memory. For example, pages 310a, ... 310f are local to the first processor 315a, while pages 310g, ... 310m are local to the second processor 315b. In the illustrated embodiment, the processors are linked by an interconnect 325, which will be familiar to the skilled artisan, and which can provide high-speed communication between the processors 315 and NUMA nodes running thereon.

In the illustrated embodiment, a first NUMA node 335a runs on the cores 320a, ... 320d of the first processor 315a, while a second NUMA node 335b runs on the cores 320e, ... 320h of the second processor 315b. The first NUMA node 335a hosts two VCls (VMs 340a, 340b), and the second NUMA node hosts a single VCI, VM 340c. In the illustrated example, the first VM 340a runs on two cores 320a, 320b; the second VM 340b runs on two cores 320c, 320d; and the third VM 340c runs on four cores, 320e, ... 320h.

To illustrate a NUMA migration, consider a situation in which VM1 340a and VM3 340c both access the same memory (*e.g*., some or all of pages 310g, ... 310m) memory locality for VM1 340a is suboptimal. In such a situation, the NUMA scheduler might decide to migrate VM1 340a from the first NUMA node 335a (*i.e.,* the source node) to the second NUMA node 335b (*i.e.,* the destination node). The state of the NUMA system 300 after such a migration is illustrated by Fig. 3B, in which VM1 340a and VM3 340c are hosted by the second NUMA node 335b, with VM1340a running on cores 320e, 320f, and VM3 340c running on cores 320g, 320h. Meanwhile, since VM1 340a no longer occupies the first NUMA node 335a, the NUMA scheduler has scheduled all four cores 320a, ... 320d for VM2 340b.

While Figs. 3A and 3B have been simplified for ease of illustration, and the circumstances of migration have equally been simplified in this example, the skilled artisan should appreciate that NUMA migrations (and other migrations) can happen for a variety of reasons, and that a variety of mechanisms (the details of which are beyond the scope of this disclosure) can be used to perform such migrations. Further should be noted that, while Figs. 3A and 3B illustrate a particular set of arrangements (each processor 315 hosting only one NUMA node 335 and both processors 315 featuring the same number of cores 320), these arrangements are provided only for purposes of illustration and processors with various numbers of cores might be used to host any number of NUMA nodes, each hosting any appropriate number and/or type(s) of VCIs, in different embodiments; moreover, any symmetry implied by Fig. 3A between processors, cores, and NUMA nodes is incidental and does not limit the scope of various embodiments.

### NUMA Migration Throttling

As noted above, while NUMA migrations can enhance system performance (*e.g.*, by improving memory locality for one or more VCIs), uncontrolled NUMA migrations can have deleterious effects. Merely by way of example, each migration of a VM (or other VCI) from one NUMA node to another can result in downtime of that VM and/or temporary performance degradation of other VMs on nodes affected by the migration (for instance, based on heavy disk or memory I/O resulting from migrating a VM between nodes).

For these and other reasons, excessive locality migrations can result in poor performance, user/administrator confusion, and/or general user dissatisfaction. As a result, a NUMA system often will employ a locality migration model that attempts to predict where and when a VM should be migrated, as well as the resulting performance impacts (which can be positive or negative) of such a migration. Such models, however, can still result in excess locality migrations, and in some cases, "migration thrashing," in which VMs are migrated frequently, which in some cases can even prevent the NUMA system from achieving even temporary stability, as a migration might be performed while, or immediately after, the system recovers from an earlier migration.

Some embodiments provide a two-part solution to the problem of thrashing. The first part is the detection of the thrashing, which presents several challenges. A key aspect of determining whether a VCI is experiencing thrashing is how quickly the migrations of that VCI happen. If there are migrations happening but they happen many hours apart, they might not be treated as "thrashing". On the other hand, in some embodiments, if the migrations happen just minutes apart, they might be considered as thrashing, although the frequency of migrations that would be considered thrashing can vary by the embodiment and/or implementation.

Some complicated workloads exhibit a complicated "warmup" pattern (loading data from disk, establishing networking connection with peers, and allocating period). This happens at the beginning of the workload and is not considered to be normal operation of the workload. During this warmup period, the system is naturally less stable and VMs might be migrated a few times before the system converges into a stable state. In other words, continuous migrations during the warmup period might not be considered as thrashing in some embodiments.

To detect thrashing as accurately as possible as a general matter across a variety of workloads, in light of these challenges, some embodiments employ a data structure, such as employ a fixed length circular buffer to store the timestamp of each migration. In such embodiments, whenever a migration of a VCI occurs, the timestamp of the migration timestamp will be recorded in the circular buffer and compared with the timestamp of the earliest migration recorded in the buffer (which, in some embodiments might be the element right after the newly recorded element). If the difference between the timestamps is shorter than a predefined threshold, then the system might determine that the VCI is experiencing thrashing.

Several factors can impact the sensitivity of thrashing detection. One factor is the length of the predefined period (or "lookback" window). For example, a longer predefined threshold means the system more frequently will tend to treat migrations as thrashing; in other words, the mechanism is more sensitive in detecting thrashing with a longer predefined threshold. For example, if the threshold is 2 seconds, then all the migrations recorded in the buffer must happen within 2 seconds to be qualified as thrashing; conversely, if the threshold is 2 hours, then all the migrations recorded in the buffer must happen within 2 hours to be qualified as thrashing. With the size of buffer and algorithm being the same, it stands to reason that more migrations will happen over a longer period of time.

Another factor impacting detection sensitivity is the size of the buffer. In some embodiments, the size of the buffer dictates how tolerant the system will be of migrations during an unstable workload warmup period. A longer circular buffer is more tolerant to warmup periods. For example, a circular buffer that holds only two entries will treat two consecutive migrations within the defined threshold as thrashing, while a circular buffer that holds ten entries will not determine that a VCI is experiencing thrashing unless the VCI experiences ten consecutive migrations within the defined threshold.

The second part of the solution, in accordance with some embodiments, is throttling (slowing down) the migration. In some embodiments, when thrashing of a VCI is detected, the system will throttle migrations of that VCI for some time. This can be beneficial because an unstable system can experience a downward spiral in which the system never recovers to a stable state. By throttling migration, the system will not allow some VCIs to be migrated for a specified period and, in a sense, can be considered as an "anchor" to stabilize the system.

However, one challenge in throttling is determining how long a migration of a particular VCI should be throttled. It is possible that after a certain time, the system has recovered into a stable state, e.g., due to the throttling, and some migrations might become necessary to load balance the system and/or the optimize locality. Certain embodiments therefore employ a heuristic to determine the amount of time (which can be thought of as a "cooldown" period) in which a VM should be throttled. In an aspect of some embodiments, this amount of time is proportional to the mapped memory size of the VCI. For example, in some embodiments, a VM with 16GB memory mapped will be throttled for a period that is eight times longer than a VM with only 2GB mapped. (It should be appreciated, of course, that this relationship is exemplary and need not be linear or consistent across all memory footprints.) A VM with a larger mapped memory footprint will need to remap more memory once a NUMA migration happens and therefore requires a longer time to enter a stable state in which the majority of its memory has been mapped. In some embodiments, the system selects a coefficient or function relating the length of this "cooldown" period to the size of the memory from empirical observation.

For example, Fig. 4 illustrates a NUMA scheduler 400 (which can be any software component or subsystem that is responsible for scheduling VCIs on NUMA nodes, such as OS scheduler, a scheduler in a hypervisor, a scheduler that is specific to the NUMA system, etc.) that implements a feedback loop for damping excessive NUMA migrations. In some aspects, this feedback loop employs the two-stage process described above. In the illustrated embodiment, the NUMA scheduler 400 comprises three functional components relevant to the feedback loop: a migration damper evaluator 405, a NUMA migration module 410, and a thrashing detector 415. Each of these components might be a module (as that term is defined above) and/or might comprise one or more software algorithms implemented within the NUMA scheduler 400. The migration damper itself is not such a module or algorithm, but instead is a limitation placed by the system on the migration of a thrashing VM (*e.g.,* a temporary inhibition of the NUMA migration module 410).

As described above, the purpose of the feedback loop is to throttle the NUMA scheduler from performing NUMA migrations when migration thrashing is occurring. As such, when the NUMA scheduler 400 finds a VM (or other VCI) as a potential migration candidate, the damper evaluator 405 determines whether the VM is currently damped (*i.e.,* whether a migration damper has been imposed on the VM). If so, the damper evaluator 405 prevents migration of the VM. In some cases, this throttling of NUMA migration occurs before the NUMA migration module 410 has the opportunity to consider whether the migration candidate VM should be migrated. In this way, NUMA migrations can be throttled without affecting the locality migration module 410, which otherwise can operate in a conventional fashion and/or as described elsewhere in this disclosure.

If the damper evaluator determines that no damper has been imposed on the candidate VM, the locality migration module 410 does determine whether the candidate VM should be migrated from a source NUMA node to a destination NUMA node (*e.g*., using conventional techniques and/or as described elsewhere herein), the NUMA scheduler migrates the VM to the destination NUMA mode.

At this point, the thrashing detector 415 determines whether the migrated VM is experiencing NUMA migration thrashing. Techniques for making this determination are described in further detail below. If the thrashing detector 415 determines that the migrated VM is experiencing thrashing, it imposes a migration damper on the migrated VM. The next time that VM is evaluated as a migration candidate, the damper evaluator 405 will determine that the VM is subject to a damper and will throttle the migration of the VM.

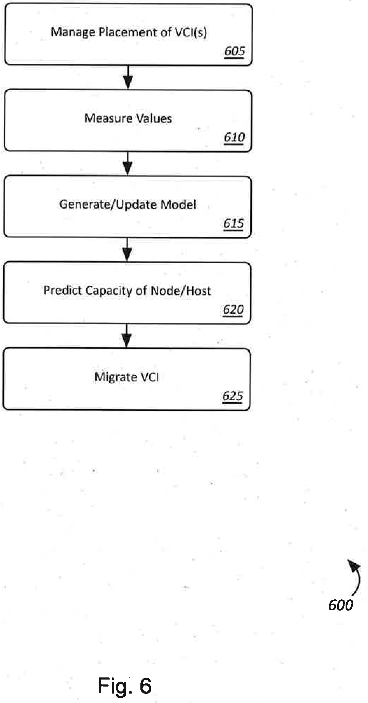

Fig. 5 illustrates a method 500 of throttling NUMA migrations. In some embodiments, some or all of the procedures of Fig. 6 might be performed by a NUMA scheduler in a virtualized NUMA system (*i.e.,* a NUMA scheduler running on or part of a virtualization layer) and/or by another component of such a system, such as a virtualization layer (*e.g.,* hypervisor) and/or the like. In some aspects, the operations of Fig. 5 can represent the functions of the feedback loop described above in the context of Fig. 4, but the scope of the embodiments is not limited to this implementation nor to any particular methodology or principles described above.

The procedures illustrated by Fig. 5, which are described in further detail below, can provide numerous benefits in the operation of a NUMA system, which is inextricably linked to the discrete field of computing technology. These procedures also can directly affect the performance of a NUMA system and/or the host(s) on which the NUMA system runs. Merely by way of example, by allowing the migration of a VCI from one NUMA node to another, the procedures of Fig. 5 can improve the performance (in terms of execution speed, memory access speed, etc.) of the VCI itself; such procedures can reduce memory and/or processing load of the underlying host(s), improving performance of the entire NUMA system. Conversely, by preventing or suppressing the migration of VCls that are experiencing migration thrashing, the procedures of Fig. 5 can also improve performance of both the VCls experiencing thrashing and/or the NUMA system (and underlying hosts) as a whole. As noted above, migration thrashing can reduce availability and/or performance of a VCI subject to such thrashing each time the VCI is migrated, and because each migration imposes processing and/or I/O overhead on the entire NUMA system and underlying host(s), migration thrashing imposes such overhead repeatedly over a relatively short period of time, potentially creating significant performance reductions across a variety of metrics, including without limitation processor capacity, memory capacity, cache availability, disk I/O performance, and/or the like. Preventing or mitigating such thrashing can reduce or eliminate the excess overhead imposed by such thrashing and therefore improve the performance of the entire NUMA system, the host(s) providing the hardware for the NUMA system, and/or any other applications running on such hosts.

At block 505, the method 500 comprises managing placement of a plurality of VCIs, which as noted above might be running on a plurality of NUMA nodes. In some embodiments, the plurality of VCIs might comprise a first VCI running on a first NUMA node and a second VCI running on a second NUMA node. Managing placement of VCIs on nodes can comprise any of a variety of operations. Merely by way of example, managing placement of a VCI might comprise starting a VCI on a particular node, stopping a VCI, configuring parameters of a VCI, migrating a VCI from one node to another, tracking performance metrics, operating parameters, or other statistics of a VCI and/or a node hosting the VCI, etc. In a general sense, managing placement of a VCI on a NUMA node can comprise any actions that cause, facilitate, or monitor operation of a VCI on a selected NUMA node.

At block 510, the method 500 can comprise tracking migrations of VCls among NUMA nodes. For example, in some embodiments, tracking migrations might comprise storing, *e.g*., in a data structure, an array of timestamps of past migrations of VCls. Any suitable data structure or arrangement of data can be used to store and/or track migrations of VCls. In some embodiments, for example, the NUMA scheduler (or other component) might store a table of VCI identifiers and corresponding date/timestamps indicating a history of migrations of such VCls. In some cases, the data structure might store source and destination nodes of each migration, although this is not required.

At block 515, the method 500 comprises determining whether one of the VCls is experiencing NUMA migration thrashing. In some embodiments, one or more actions might be taken, *e.g*., by the NUMA scheduler, based on such a determination, as described below for example. In some embodiments, this determination might comprise evaluating the timestamps of past migrations of this VCI, *e.g*., by comparing a number of past migrations occurring over a specified lookback period with a specified threshold number of migrations. The term "lookback period" is used broadly herein to refer to any prior period or interval of time over which some measurement, value, or parameter (in this cases, the number of migrations) is evaluated. In some embodiments, the lookback period might be any appropriate number of minutes, hours, days, etc. For example, in a particular embodiment, the lookback period might be one day, and the threshold number of migrations might be five. If the tracked number of past migrations over the preceding 24 hours exceeds five, the VCI might be determined to be experiencing migration thrashing. It should be appreciated that the lookback period and/or the threshold number can be set automatically and/or might be set by administrator input. In either case, the values of these parameters might depend on the nature of the VCI and/or its workload, implementation-specific constraints and/or characteristics of the environment in which the VCI operates, and/or the resources available on the relevant NUMA nodes. In some embodiments, the type of migration is considered in evaluating past migrations of the VCI. For example, in some cases, the tracked history of migrations might include only NUMA migrations and might exclude migrations of the VCI for other reasons (*e.g*., load balancing, node or host failure, etc.); alternatively, and/or additionally, these non-NUMA migrations might be tracked in the migration history of a VCI but might be disregarded when evaluating the timestamps of past migrations.

In some embodiments, if and/or when the VCI is experiencing migration thrashing, the method 500 comprises imposing, a NUMA migration damper on the first VCI (block 520). In some embodiments, the imposition of the migration damper might be based, at least in part, on a determination (*e.g.*, as described above) that the VCI is experiencing migration thrashing. In some embodiments, the NUMA migration damper prevents the first VCI from being evaluated, *e.g*., by a NUMA migration module or another component of a NUMA scheduler, virtualization layer, etc., as a NUMA migration candidate and/or otherwise prevents the migration of that VCI from the node on which the VCI is currently running to another node. A number of techniques can be used to impose a migration damper. Merely by way of example, each VCI might have a set of corresponding metadata, which can be stored with the VCI (*e.g*., as part of a VMDK file comprising an image of the VCI) or from the VCI (*e.g*., as part of a separate file that is unique to the VCI, as part of a data structure that stores collective metadata about a plurality of VCls, etc.). The migration damper might comprise a bit or field in such metadata, and imposing the migration damper might comprise setting the bit or field to a value that prevents the NUMA scheduler (or other appropriate component) from migrating the VCI while the bit or field has that value. Alternatively, and/or additionally, the NUMA scheduler (or other component) might store a table or list of identifiers of VCls that are subject to a migration damper, and imposing the migration damper might comprise adding an identifier of the VCI to such a list. As a general matter, imposing a migration damper can comprise any operation performed by the NUMA scheduler (or other appropriate component) that serves to indicate that the VCI should not be migrated or otherwise causes the NUMA scheduler not to migrate the VCI while the migration damper is imposed.

Conversely, in some embodiments, if and/or when it is determined that the first VCI is not experiencing NUMA migration thrashing, the migration damper is not imposed on the VCI. Thus, the method can comprise evaluating, *e.g*., based on a determination that the VCI is not experiencing the first VCI as a migration candidate for NUMA migration (block 525). This evaluation can comprise any of a variety of operations, including without limitation conventional techniques, as well as those described elsewhere herein. Some exemplary techniques are disclosed in US Patent Nos. 9,465,669, 10,255,091, and 11,340,945 (the "Incorporated Patents") which are incorporated herein by reference.

At block 530, therefore, the method might further comprise migrating the VCI to from a source node (on which it is running prior to the migration) to a destination node (where it will run after the migration). In some embodiments, this migration might be based at least in part on the evaluation of the first VCI as a migration candidate. Any of a variety of techniques, including without limitation conventional techniques, techniques described herein, and/or techniques described in the Incorporated Patents, can be employed to perform the migration of a VCI from one node to another.

At some point, the VCI will stop experiencing thrashing, often because of the imposition of the migration damper. In some embodiments, the VCI is considered to have stopped thrashing when its migration history no longer meets the criteria by which it was determined (*e.g*., at block 515) to have been experiencing thrashing. Thus, at block 535, the method can comprise removing the migration damper from a VCI on which it had been imposed. In some cases, the migration damper might be removed automatically, for example, after the elapse of a cooldown period after the time at which the migration damper was imposed. The term "cooldown period" is used broadly herein to refer to any period of time in which some action is inhibited or some condition is maintained (in this case, for example, the imposition of a migration damper). In some embodiments, the cooldown period can be sufficient allow the system to return to stability after the instability caused by migration thrashing. In some cases, the length of the cooldown period might be based on characteristics of the VCI, such as the memory size of the VCI, processor utilization of the VCI, etc. For example, in some embodiments, the length of the cooldown period might be proportional (e.g., using any appropriate function, such as a multiplier, an exponential or logarithmic function, etc.) to the memory size of the VCI.

Alternatively, and/or additionally, the migration damper might be removed based on evaluation such as the evaluation described in connection with block 515, *e.g.,* when such an evaluation results in a determination that the VCI is no longer experiencing thrashing. Thus, the evaluation of migration timestamps (*e.g*., as described above in the context of block 515) might be performed periodically and/or upon occurrence of a trigger condition, such as an administrator command, a detected change in workloads, a load-balancing migration, and/or other changed conditions within the NUMA system and/or hosts supporting the NUMA system. That evaluation might, at some iteration, indicate that the VCI is no longer experiencing NUMA migration thrashing, particularly, as noted above, because imposition of the migration damper prevents and/or suppresses NUMA migration of the VCI while the damper is imposed. Thus, as shown by the dashed lines in Fig. 5, in some embodiments, the method 500 (or various operations thereof) might be repeated periodically and/or upon occurrence of a trigger condition. In such cases, when an iteration of the loop of procedures illustrated by Fig. 5 produces a determination that the VCI is no longer experiencing thrashing, the migration damper can be removed. A variety of procedures are described above that can be used to impose a migration damper on a VCI, and the skilled artisan should appreciate that the inverse or reverse of the procedure used to impose the damper can be performed to remove the damper. Other techniques to remove a migration damper can be used as well.

### NUMA Node Capacity Prediction

While throttling migration can improve performance of NUMA systems, migration itself is often a key aspect of a NUMA architecture, improving the scalability, load balancing, and/or fault tolerance of a NUMA system. Various embodiments provide improved techniques for managing the placement and migration of VCls on NUMA nodes, for example by enabling improved predictions of NUMA node capacity to inform placement and/or migration decisions by, *e.g.,* the NUMA scheduler. Fig. 6 illustrates a method 600 of predicting capacity of NUMA nodes and/or of placing/migrating NUMA nodes based on such predictions. In some embodiments, some or all of the procedures of Fig. 6 might be performed by a NUMA scheduler in a virtualized NUMA system (*i.e., a* NUMA scheduler running on or part of a virtualization layer) and/or by another component of such a system, such as a virtualization layer (*e.g*., hypervisor) and/or the like. In some embodiments, the method 600 of Fig. 6 can be performed in conjunction with the method 500 of Fig. 5. In other embodiments, the methods 500 and 600 might be performed separately but within the same NUMA system and/or by the same NUMA scheduler. It should be appreciated that the NUMA migration throttling and node capacity prediction techniques described herein are complementary, they each have independent utility. For example, in some cases, migration throttling might be particularly applicable to NUMA-specific migrations, such as for locality optimization, while node capacity predictions can be particularly useful for load-balancing migrations. Nonetheless, the capacity predictions can also be useful in the case of NUMA migrations; for example, even when locality considerations might suggest migration of a VCI that is not experiencing thrashing, if the predicted capacity of the destination node cannot support the VCI, such a migration might actually decrease performance of the VCI and/or of the system as a whole. In such cases, capacity prediction might enable additional and/or alternative solutions, such as performing the NUMA migration for a first VCI but only after migrating a second VCI away from the destination node of the NUMA migration to provide additional capacity for the first VCI, etc.

Like the procedures illustrated by Fig. 5, the procedures illustrated by Fig. 6, which are described in further detail below, can provide numerous benefits in the operation of a NUMA system, which is inextricably linked to the discrete field of computing technology. These procedures also can directly affect the performance of a NUMA system and/or the host(s) on which the NUMA system runs. For example, as noted above, inaccurate and/or imprecise estimates of the capacity of a NUMA node and/or the hardware of the underlying can result in inaccurate predictions of the performance of the NUMA node and/or the underlying host when VCls are placed on, migrated to, or migrated from that node. Thus, the procedures of Fig. 5 can directly and positively affect the performance of individual VCIs, the NUMA system as a whole, and/or the hardware of the host(s) on which the NUMA system runs. Merely by way of example, if the capacity of a NUMA node or underlying hardware is estimated to be lower than the actual capacity, the NUMA scheduler might underload the node, which can have two negative consequences: first, by failing to fully utilize the node, the NUMA scheduler allows NUMA system and/or underlying hardware to perform under its potential; for example, in many cases, if a NUMA node uses two cores of a CPU and that node is not fully loaded, neither of those cores will operate at its maximum capacity, leaving some available capacity, and therefore performance "on the table." On the other hand, this under-prediction of the capacity of a first node might result in the failure to migrate a VCI to that node from a second node. The performance of the second node might suffer because that node is overloaded beyond its capacity, and that situation could have been prevented with a more accurate prediction of the capacity of the first node. The over-prediction of the capacity of a particular node can result in the inverse situation, which also can have the same negative consequences. In short, the purpose of load balancing is well-known: to optimizes the available resources (and therefore the performance) of the system or cluster as a whole. The procedures of Fig. 6 can enable more effective load balancing and therefore can improve the performance of both individual VCIs and the NUMA system and/or underlying hardware platform as a whole.

At block 605, the method 600 comprises managing placement of a plurality of VCls (*e.g.,* VMs, etc.) collectively running on a plurality of NUMA nodes. Exemplary procedures for managing placement of a plurality of VCls are described above in the context of block 505, and any such procedures can be used in the context of Fig. 6 as well.

At block 610, the method 600 comprises measuring values, *e.g*., for any or all nodes within a NUMA system (which, as noted above, can run on a single host or across a plurality of hosts), of performance and/or operational metrics. Such metrics can include, without limitation, parameters related to CPU performance and/or utilization, for example, values of CPU load and/or CPU capacity. It should be appreciated that, while the examples of CPU load and CPU capacity are used herein, other parameters can be measured and/or used for the procedures described below in accordance with various embodiments. Moreover, while the procedures of Fig. 6 are described in the context of a CPU, these procedures can be performed for other types of processors, including without limitation those described herein, and/or for a particular core or core(s) of a CPU or other type of processor; further, if a host comprises multiple processors, these procedures can be performed, in some embodiments, for each processor individually and/or for some or all of the processors collectively.\

The term "capacity," is used broadly herein to include any capability of an entity (as defined below) to perform workload(s) and can be measured using any appropriate metric. Similarly, the term "load," in the context of processor measurement, means the amount of demand on a processor at a given point in time (*e.g*., demand placed on the processor by the performance of one or more workloads). In some embodiments, load can be thought of as the fraction (or percentage) of the processor's load when operating at 100% capacity, reflecting the demand placed on the CPU relative to its standard performance specification. Load can exceed 100%, which means that the processor operating at 100% cannot process all of the load, which can cause system bottlenecks, but when the processor operates beyond its rated capacity (*e.g*., through overclocking, turbo boost, or enhanced modes), load values over 100% can be processed without bottlenecks through utilization of additional performance headroom (*e.g.*, when the processor operates over 100% capacity as described above).

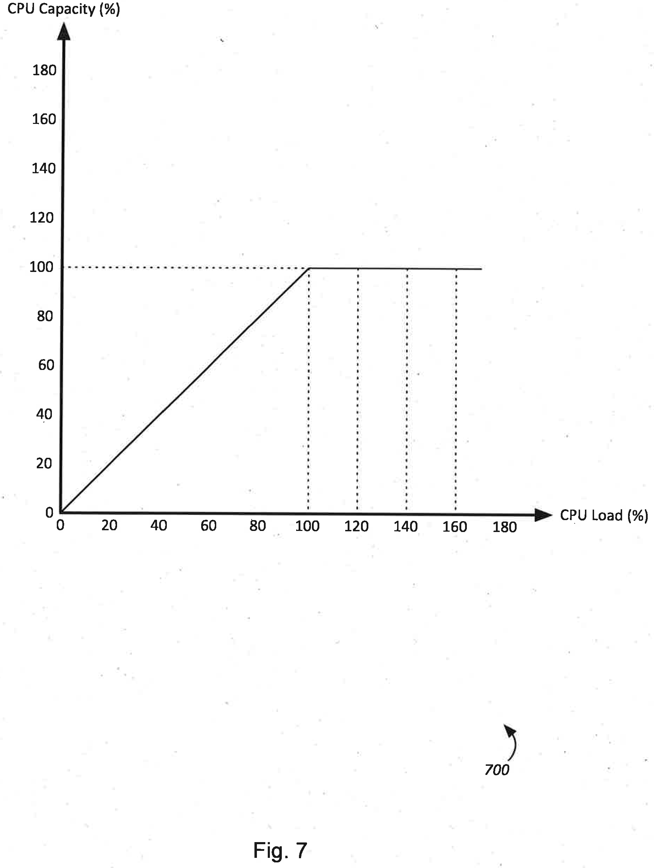

Conventionally, many load balancing models and algorithms fail to account for this ability of entities to operated at overcapacity. For example, Fig. 7 illustrates a plot 700 showing a traditional view of processor capacity vs. load. This plot 700 demonstrates the assumption that, as the load on the processor scales from 0 to 100%, the measured capacity of the processor scales (hypothetically roughly linearly) from 0 to 100% as well. In other words, if the processor is not loaded to capacity, the apparent capacity of the processor is roughly the same as the load, because the processor is providing only as much capacity as the load requires.

Thus, a typical assumption (which is sometimes made by NUMA schedulers) is that, once the load reaches 100%, the processor is providing its maximum capacity, as shown by the portion of the plot 700 in excess of 100% load. With modern processors, however, this assumption often is incorrect, for a variety of reasons. First, many modern processors offer an overcapacity mode (such as overclocking, Intel Turbo Boost^{™}, AMD Precision Boost^{™}, etc., all of which are collectively referred to herein as "Turbo" mode), which can temporarily increase the clock speed of one or more cores of a processor under certain conditions. In many cases, Turbo mode is managed by the processor and platform firmware, but it can also be managed, in some cases, by platform software, such as an OS, virtualization layer (*e.g.,* hypervisor), etc. Examples of such management can include VM (or NUMA node) CPU scheduling, VMM and/or node-level power budgets, workload distribution, and/or memory access patterns (*e.g*., if workloads-such as VMs-on NUMA nodes exhibit good memory locality and primarily access local memory, the processor may have more opportunities to enter and maintain Turbo mode).. .

This incorrect assumption can have deleterious effects on load balancing operations. For example, assuming a 100% ceiling on capacity underestimates available performance, potentially leading to suboptimal load distribution. Moreover, when operating over 100% load, capacity often doesn't scale linearly. Ignoring these realities of modern chips can mispredict system behavior, especially for bursty workloads where Turbo modes can handle short-term spikes. Moreover, as mentioned, some tasks (e.g., parallelizable workloads) benefit more from overcapacity, and assuming a rigid 100% cap fails to account for this, reducing efficiency in load balancing.

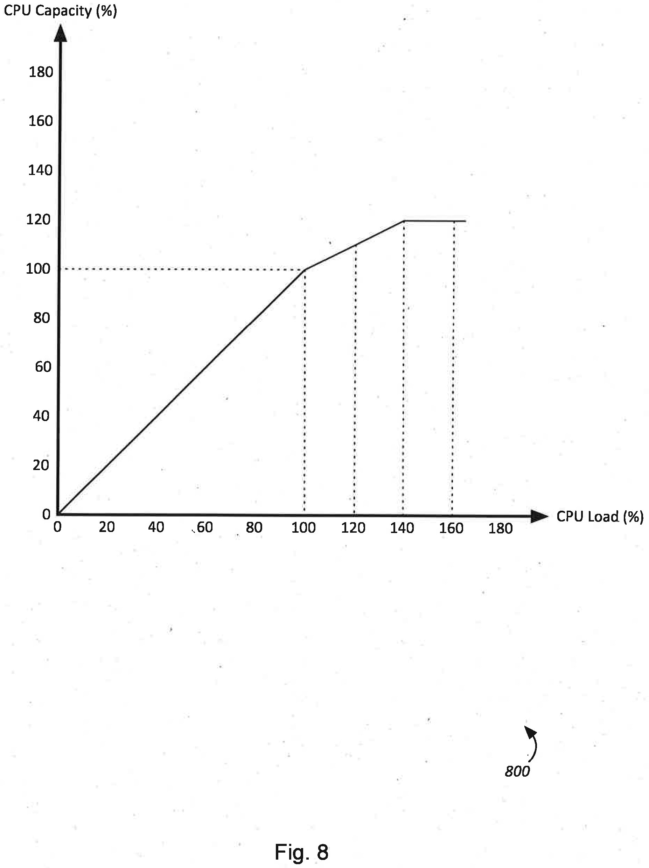

Consequently, the plot 800 of Fig. 8 illustrates a more realistic view of the capacity of a processor with a Turbo mode, under overclocking conditions, and/or the like. As this plot 800 demonstrates, the processor capacity often does not flatline at 100% but instead continues to increase as load increases. At some point, the increase in capacity might taper (as shown here at 100% load) or even stop (as shown here at 140% load), but using a prediction of 100% capacity often will lead to improper NUMA scheduling decisions and/or load imbalance across a NUMA system.

As noted, however, the degree to which Turbo mode (or overclocking) can increase the capacity of a particular entity, however, can vary between models of processors, and even between different processors with the same manufacturer, model number, and/or specifications. This variance depends on many factors, some of which are related to the model of the processor, and even to variance between individual processors themselves. For example, different models of processors, and processors from different manufacturers, often will have different performance characteristics, including designed capacity as well as the increase to design capacity that a Turbo mode can supply.

Factors affecting individual chips, even of the same mode, can include manufacturing process variability and/or bin sorting by the manufacturer. Process variability can result from variations in the wafers or substrate used to construct the processors (among other reasons), which can affect the characteristics of the components used to construct the processor. Some chips might exhibit better-than-expected characteristics, allowing them to operate at higher frequencies and/or voltages than expected, while others might exhibit worse-than-expected characteristics, resulting in the inability to operate with stability at the expected frequencies and/or voltages. Generally, a manufacturer will test the chips after production and sort them into different performance tiers or "bins" based on their tested performance. However, some chips in the lower bins may still have the potential to perform at higher speeds. Further, each chip usually will have a specified thermal design power (TDP) rating, which specifies the maximum amount of heat a processor is expected to generate under normal operating conditions. Chips that have better thermal characteristics can dissipate heat more effectively, allowing them to sustain higher Turbo mode frequencies for longer periods without overheating.

Other factors can be environmental and/or implementation-dependent, such as ambient temperature in and around the host operating the processor, the level of airflow and ventilation, the effectiveness of on-chip and off-chip cooling solutions, and the like can affect how long, and/or at what frequency a processor or core can maintain Turbo mode. Moreover, the intensity and nature of the workload on a processor or core can influence Turbo mode behavior; for example, some workloads may stress the chip more heavily, causing it to reach its thermal limits sooner and throttle back its Turbo mode frequency. Other workloads may be less demanding, allowing the chip to sustain higher Turbo mode frequencies for longer periods. Alternatively, and/or additionally, the number of cores actively engaged in a workload can also impact Turbo mode performance. In some cases, chips may be able to sustain higher Turbo mode frequencies when fewer cores are active, as the thermal load is spread across fewer cores.

Moreover, certain machine instructions, such as advanced vector instructions (AVX) and/or advanced matrix instructions (AMX) in the x86 architecture, draw significant power and can greatly slow down the CPU frequency even in Turbo mode. Such instructions are very common in machine learning or high-performance computing workloads. Moreover, the reachable attainable capacity can also be impacted by the nature of the workload. For example, a workload that can be easily parallelized by hyperthreading can drive a processor to a greater capacity than a workload that is not well parallelized by hyperthreading. Further, different NUMA nodes can have different capacity, because different NUMA nodes can contain different numbers of CPU cores or run applications with different machine instructions. In other words, NUMA node processor capacity can change dynamically in a different way at different time on different CPU models.

Thus, the capacity of different processors, even those with the same model number and specifications, to operate in Turbo mode can vary due to manufacturing variations, temperature sensitivity, voltage tolerance, environmental conditions, and/or workload characteristics. These factors can lead to subtle differences in the processors' performance under Turbo mode, even though they appear identical on paper. As such, it is difficult to make accurate predictions about how a processor's capacity will scale above 100% on any sort of generalized basis.

As such, in some embodiments, processor parameters (*e.g*., load and/or capacity values) are measured at various points on a capacity curve of the processor. As used herein, the term "capacity curve" is used broadly to refer to any relationship between the load placed on a processor or core and the capacity of that processor or core. In a broad sense, the term "capacity" is broadly herein to mean the ability of an entity (*e.g*., as defined below) to perform workloads. The term "100% capacity" as used herein in the context of processor performance, means a theoretical and/or measured output of a processor or core under 100% load; this output might be measured as clock rate, peak integer performance (*e.g*., clock rate multiplied by number of cores per processor-or simply by one, in the case of a single core-multiplied by the number instructions performed per cycle), peak floating-point performance (*e.g*., clock rate multiplied by number of cores per processor-or simply by one, in the case of a single core-multiplied by floating point operations (FLOP) or floating point units (FPU) per cycle), or any other measure of a processor to handle a given workload. In some cases, the IPC, FLOP, and/or FPU values of a processor or core are available in product specifications, etc. In some embodiments, the capacity could be thought of as a fraction or percentage of the capacity of the processor or core, however measured, when that processor or core is loaded at 100%.

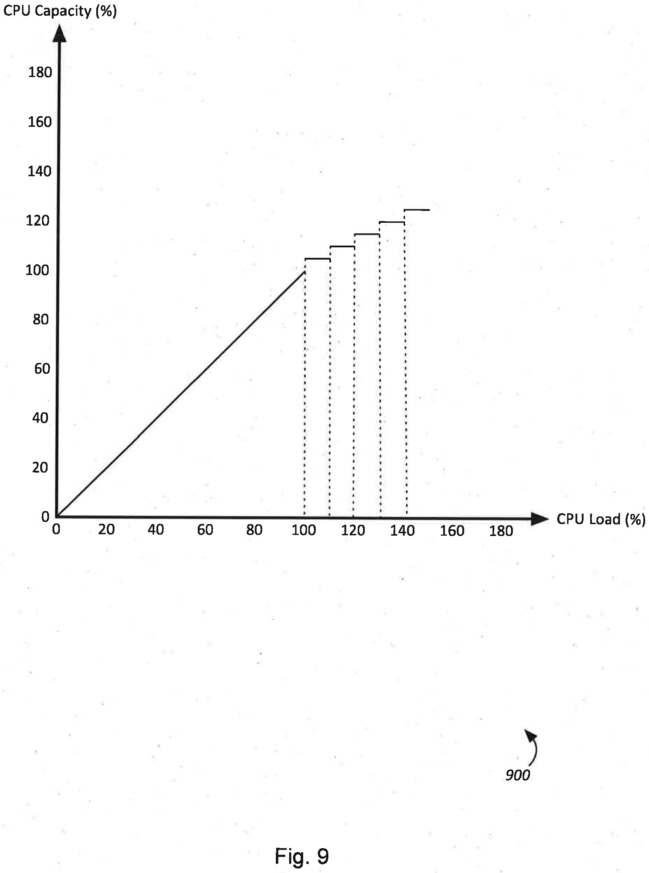

For example, Fig. 9 illustrates an embodiment in which processor load and capacity are measured (as indicated by the dotted lines) at 100%, 110%, 120%, 130%, and 140% load. (In this case, the load curve is shown in dotted lines for clarity). As shown, in this embodiment, the capacity is assumed to be roughly equal to the load at below 100%, while the capacity values between measurement intervals are assumed to be constant. Neither of these measurement strategies are required, however. In some embodiments, for example, capacity measurements might be taken at loads of less than 100%, which might possibly provide a more accurate assessment of capacity at those levels (although, as noted, in many cases, below 100% load, the measured capacity will be roughly the same as the load, simply because the processor will only provide as much capacity as required by the load).

Likewise, capacity measurements need not be performed at any particular level of load or on any particular interval. Merely by way of example, in some embodiments, the NUMA scheduler (or another component, such as a sampling algorithm in the OS, hypervisor, etc.) will sample load and/or capacity values periodically over time (and/or in response to particular triggers, etc.) and store the sampled values. The skilled artisan will appreciate, based on the disclosure herein, that there are a variety of techniques for measuring and/or sampling processor performance, and any such techniques can be used in accordance with different embodiments. (For purposes of this disclosure, the terms "measure" and "sample," along with derivative terms, are used broadly to refer to any process or technique by which values of performance and/or operating parameters of processors, cores, and/or other hardware can be ascertained and/or recorded.) In some embodiments, for example values of load and capacity might be stored (*e.g.,* by the NUMA scheduler) as a tuple or linked pair of values in an array of such tuples, although many other arrangements are possible. As noted above, in some embodiments, each the load/capacity (and/or any other parameters) of each processor on which the NUMA system runs might be measured in this way, while in some embodiments, each core of each processor might be measured in this way. In particular embodiments, two or more cores might be measured collectively (and/or measured individually, with the results combined); for example, all of the cores on which a NUMA node runs might be measured and/or otherwise analyzed collectively, to enable the capacity of the entire node to be predicted. All of the processors/cores of a particular host might be treated in this way as well, to enable the prediction of the capacity of the entire host. A variety of such arrangements are possible in accordance with various embodiments.

Accordingly, in some embodiments, the method 600 can comprise generating a model of one or more cores or processors, *e*.*g*., using data collected in the measurements described above. Different embodiments can employ a variety of models and/or techniques for generating a model, some of which are discussed in further detail below.

While this discussion often uses a single processor as an example for convenience, it should be appreciated that models can be generated in accordance with various embodiments that model the performance of one or more cores of a processor, the performance of a host and/or NUMA node (e.g., by modeling the collective performance of some or all of the core(s) and/or processor(s) that the host runs or that the NUMA node uses), and/or the like, all of which can be considered "entities" for purposes of this discussion. In the context of this discussion, the term "performance" is used to refer to any statistic or parameter by which an entity can be evaluated, including without limitation those described above. In some embodiments, performance of an entity can mean the capacity of the entity, the capacity of the entity under a given load, and/or the general relationship between the load on an entity and the capacity (the capacity curve) of the entity. In some embodiments, the system generates an individual model for each processor (and/or core, NUMA node, host, or plurality of any of these) used by the system. In other embodiments, a general model might be used to provide information to predict performance of some or all of these entities in a system (*e.g*., by correlating received data with a particular entity from which that data was sampled); this might include receiving at the model an identifier of the entity along with, *e.g.,* a load/capacity tuple. The output of the model could then be requested and provided as an analysis of any entity for which data has been received.

Thus, in some embodiments, the model simulates and/or represents a capacity curve of the entity, a maximum capacity of the entity, etc. In a particular embodiment, for example, the maximum capacity of an entity might be defined as the capacity when the entity is subject to a load at which the capacity increase stops (*e.g*., 140% load in the example illustrated by Fig. 8). In some embodiments, the load (the independent variable) might be divided into different ranges that represent different levels of load. Merely by way of example, the ranges might be [0%-50%][50%-100%][100-150%]. In such embodiments, the model might assign each range a capacity value, which can represent the average capacity when processor load falls within that range. It should be appreciated that the definitions of ranges are discretionary, and that the ranges need not necessarily be of equal size; nor is it necessary for the ranges to cover the entire spectrum of load between 0% and some maximum value (*e.g*., the minimum load at which the maximum capacity is reached).

In some cases, the model is a learning model (*e.g.,* a machine learning (ML) model; in such cases, generating the model can comprise training a machine learning (ML) model to estimate a capacity (*e.g.,* a capacity curve, a maximum capacity, etc.) of each entity (*e.g*., each NUMA node), based on measured values of CPU load and CPU capacity for each respective entity. For example, in some embodiments, the average capacity in each range is dynamically learned and/or can be updated as additional values of, *e.g.,* load and capacity are measured over time (*e.g.,* taking a first set of load/capacity measurements over a first interval of time and taking a second set of measurements over a second, subsequent, interval of time) while the processor is operating under various levels of load. Merely by way of example, if the system software observes that when the NUMA node runs at 120% demand and the NUMA node delivers 115% capacity, these values can be provided to the model. Thus, the model generated and/or employed by the NUMA scheduler (and/or other components) can be considered a "dynamic model," which means, for purposes of this disclosure, any model that changes over time based on updated data, *e.g.,* to account for changing conditions that affect the capacity curve of a particular processor.

In some cases, the model is configured to perform an exponentially weighted moving average (EWMA) operation to dynamically update the predicted capacity based on the measured capacity value and the range in which the measured load value falls. As a simple example, using the system's observation described above, if the range that covers 120% previously predicted that the capacity would be 127%, then the prediction provided by the model would change to (115% + 127%) / 2 = 121% after ingesting the observation above, assuming the new sample is accorded the same weight as the old prediction value in the EWMA calculation, although this assumption might be changed, *e.g*., to weight newer samples more heavily than older samples. The weighting factors are discretionary and can vary by embodiment and/or implementation details.

In some embodiments, *e.g.,* in which the model is updated as sample data (*e.g.,* values/data gathered using the procedures described above in the context of block 610) arrives at the model, the model can adapt dynamically to changes in the capacity curve of a processor over time. Merely by way of example, if a thermal fan stops functioning in a host, causing ambient temperature to rise and the processor to run significantly slower at a given load (or across all loads), or a machine learning workload starts running that uses more AVX/AMX instructions, the model can account for that. Thus, unlike some conventional solutions, the predictions enabled by the model can account for real-time (or near-real time and/or relatively recent) operating conditions, including actual environmental conditions and/or workloads running on hosts and/or NUMA nodes.

In some embodiments, the model makes no assumptions about the hardware of the entity being modeled (*e.g*., is not constrained by published statistics for a particular processor model number); thus, a model for a processor with stronger capacity will deliver a higher predicted capacity than a model for a weaker and slower CPU model. In some aspects, the models generated by the system can treat the core(s) and/or processor(s) of a host or NUMA node as a "black box," with no prior assumptions or inputs other than the performance of the processor(s) themselves. Of course, in other embodiments, a model generated for an entity might be pre-trained based on data from a similar entity (*e.g*., for a processor, the model could be pre-trained on data from the same model processor; for a host or NUMA node, the model could be pre-trained on data from a similarly configured host or node). Similarly, a new model might be adapted from an existing model from a similar entity. Nonetheless, in some embodiments that use such pre-training or adaptation techniques, each model, as time passes and performance samples are collected, can adapt to (or "learn") the specific performance of the entity that it is modeling, so as a general matter, each model can be particular to the entity (core(s), processor(s), NUMA node, host, etc.) that it is modeling.

At block 620, the method 600 comprises predicting, based on the ML model(s) of estimated NUMA node capacities, a capacity of a particular NUMA node after a VCI is placed on that node, for example, by migrating the VCI from another node. In NUMA node is trying to predict the NUMA node processing capacity after moving in/out a VM, it uses the value from the range to predict the capacity. For example, a NUMA node that used to be run at 90% demand and the scheduler is trying to predict what the capacity would look like if another 30% demand is moved in (which equals 120% of demand), it will predict 121% capacity with the situation explained above.

At block 625, the method 600 comprises placing a VCI on a NUMA node. In some embodiments, the placement of the VCI is based at least in part on a predicted capacity of the NUMA node (e.g., a capacity of the NUMA node predicted based on a model of the capacity of the NUMA node generated and/or updated as described in the context of block 620). A variety of techniques known in the art, including without limitation those described in the Incorporated Patents, can be used to place a VCI on a NUMA node. In some embodiments, for example, placing a VCI on a NUMA node might comprise migrating a VCI from one NUMA node to another NUMA node. Exemplary techniques for such migration are described above in the context of block 530, although embodiments are not so limited.

### Exemplary Hardware Configurations

Fig. 10 is a block diagram illustrating an example of a device 1000, which can function as described herein, including without limitation serving as a host and/or computer system (or a component of any of these) in accordance with various embodiments, and/or performing some or all operations of the methods described herein. No component shown in Fig. 10 should be considered necessary or required by each embodiment. For example, many embodiments may not include a processor and/or might be implemented entirely in hardware and/or firmware logic. Similarly, many embodiments may not include input devices, output devices, or network interfaces.

With that prelude, as shown in Fig. 10, the device 1000 may include a bus 1005.. The bus 1005 can include one or more components that enable wired and/or wireless communication among the components of the device 1000. The bus 1005 may couple together two or more components of Fig. 10, such as via operative coupling, communicative coupling, electronic coupling, and/or electric coupling. Such components can include a processor 1010, nonvolatile storage 1015, working memory (*e.g*., system memory, such as dynamic random-access memory (DRAM)) 1020, and/ or circuitry 1025. In some cases, the system 1000 can include human interface components 1030 and/or a communication interface 1035.

While these components are displayed as integrated within the device 1000, certain components might be located external from the device 1000. As such, the device 1000 might include, instead of or in addition to the components themselves, facilities for communicating with such external devices, which therefore can be considered part of the device 1000 in some embodiments.

Merely by way of example, the nonvolatile storage 1015 can include a hard disk drive (HDD), a solid-state drive (SSD), and/or any other form of persistent storage (*i.e.,* storage that does not require power to maintain the state of the stored data). While such storage often is incorporated within the device 1000 itself, such storage might be external to the device 1000 and can include external HDD, SSD, flash drives, or the like, as well as networked storage (*e*.*g*., shared storage on a file server, etc.), storage on a storage area network (SAN), cloud-based storage, and/or the like. In particular embodiments, as mentioned above, the storage can comprise a vSAN, and/or can be shared as part of a vSAN, particularly in cases in which the device 1000 is employed as a host in a virtualized system, SDDC, etc. Unless the context dictates otherwise, any such storage can be considered part of the device 1000 in accordance with various embodiments. In an aspect, the storage 1015 can be non-transitory.

Similarly, the human interface 1030 can include input components 1040 and/or output components 1045, which can be disposed within the device 1000, external to the device 1000, and/or combinations thereof. The input components 1040 can enable the device 1000 to receive input, such as user input and/or sensed input. For example, the input components 1040 may include a touch screen, a keyboard, a keypad, a mouse, a button, a microphone, a switch, a sensor, a global positioning system sensor, an accelerometer, a gyroscope, and/or an actuator. In some cases, such components can be external to the device 1000 and/or can communicate with components internal to the device 1000 such as input jacks, USB ports, Bluetooth radios, and/or the like. Similarly, the output component 1045 can enable the device 1000 to provide output, such as via a display, a printer, a speaker, and/or the like, any of which can be internal to the device 1000 and/or external to the device but in communication with internal components, such as a USB port, a Bluetooth radio, a video port, and/or the like. Again, unless the context dictates otherwise, any such components can be considered part of the device 1000 in accordance with various embodiments.

From these examples, it should be appreciated that various embodiments can support a variety of arrangements of external and/or internal components, all of which can be considered part of the device 1000. In certain embodiments, some or all of these components might be virtualized; examples can include virtual machines, containers (such as Docker containers, etc.), cloud computing environments, platform as a service(PAAS) environments, and/or the like.

In an aspect, the nonvolatile storage 1015 can be considered a non-transitory computer readable medium. In some embodiments, the nonvolatile storage 1015 can be used to store software and/or data for use by the device 1000. Such software/data can include an operating system 1050, data 1055, and/or instructions 1060. The operating system can include instructions governing the basic operation of the device 1000 and can include a variety of personal computer or server operating systems, embedded operating systems, and/or the like, depending on the nature of the device 1000. The data 1055 can include any of a variety of data used or produced by the device 1000 (and/or the operation thereof), such as media content, databases, documents, and/or the like. The instructions 1060 can include software code, such as applications, object code, assembly, binary, etc.) used to program the processor 1010 to perform operations in accordance with various embodiments. In an aspect, the operating system 1050 can be considered part of the instructions 1060 in some embodiments.

The processor 1010 can include one or more of a central processing unit (CPU), a graphics processing unit (GPU). In some embodiments, the processor 1010 might include one or more accelerators or processing units, referred to generally as xPU, which can include CPUs, GPUs, tensor processing units (TPU), neural processing units (NPU), microprocessors, controllers, microcontrollers, digital signal processors (DSP), programmable logic (such as field-programmable gate arrays (FPGA), erasable programmable logic devices (EPLD), or the like), application-specific integrated circuits (ASIC), systems on a chip (SoC) and/or other types of processing components. The processor 1010 can be implemented in hardware, firmware, or a combination of hardware, firmware and/or software. In some implementations, the processor 1010 includes one or more processors capable of being programmed to perform one or more operations or processes described elsewhere herein. In some embodiments, a processor *1010* (*e.g.,* a CPU, GPU, etc.) is physical chip that executes instructions, while processor cores are independent processing units within the processor, each capable of executing tasks simultaneously. In some embodiments, a processor 1010 can have one or more cores (*e.g*., single-core, dual-core, quad-core, etc.), and the cores share resources like cache and memory controllers. More cores generally increase parallel processing capacity, allowing the processor to handle multiple tasks efficiently. As used herein, the term "processor" can refer to the entire chip and/or any collection of one or more cores on the chip, unless the context dictates otherwise.

For example, in some embodiments, the device 1000 can comprise logic 1065. The term, "logic," is used herein to refer to broadly to any tangible representation of the techniques, principles, and/or methodologies that govern the behavior of electronic components (including without limitation, processors, circuits, devices, etc.) and systems (including without limitation computer systems) to perform and/or achieve specific operations, functions, and/or outcomes in accordance with embodiments described herein. Logic can include a wide array of elements including software instructions (which can be encoded on non-transitory computer-readable media, loaded into a working memory 1020, executed/executable by a hardware processor), firmware instructions (which can be executed and/or executable by a processor or can be otherwise executable and can be stored, *e.g*., in a programmable memory), and/or hardware instructions, circuitry, and/or configurations, all of which are referred to herein collectively as "instructions."

The logic (and/or the instructions embodying the logic) collectively can instruct and/or cause such electronic components and/or systems how to process information and/or execute tasks in accordance with various embodiments. Thus, some or all of the logic enabling or causing the performance of some or all of the operations described herein might be encoded in hardware or firmware circuitry and/or executed directly by such circuitry. In some embodiments, hardware and/or firmware circuitry might be embodied by a semiconductor chip, system on a chip (SoC), application-specific integrated circuit (ASIC), programmable logic devices (*e.g.*, field-programmable gate arrays (FPGA), programmable logic devices (PLD), such as erasable PLDs (EPLD), complex PLDs (CPLD), etc.), and/or the like.

The logic 1065 therefore can be any sort of code, instructions, circuitry, or the like that can cause the device 1000 to operate in accordance with the embodiments herein (e.g., to perform some or all of the processes and/or operations described herein). Merely by way of example, the logic 1065 can include the instructions 1060, which might be stored on the nonvolatile storage 1015 as noted above, loaded into working memory 1020, and/or executed by the processor 1010 to perform operations and methods in accordance with various embodiments. In an aspect, these instructions 1060 can be considered to be programming the processor 1010 to operate according to such embodiments. In the same way, the operating system 1050 (to the extent it is discrete from the instructions 1060) might be stored on the nonvolatile storage 1015, loaded into working memory 1020, and/or executed by a processor 1010.

Alternatively, and/or additionally, as noted above, logic can include the circuitry 1025 (*e.g*., hardware and/or firmware), which can operate independently of, or collaboratively with, any processor 1010 the device 1000 might or might not have. (As noted above, in some cases, the circuitry 1025 itself can be considered a processor 1010.) As used herein, the term "hardware or firmware logic" is used to refer to any combination of hardware and/or firmware circuitry, but not instructions stored as software, that collectively perform the functions of logic, as described herein. Such circuitry 1025 might be embodied by one or more electronic circuits (*i.e*., a collection of electronic components, such as resistors, capacitors, etc. in electronic communication) and be as simple as resistive/capacitive (RC) circuit, or as complex as set of one or more transistors, chips, SoCs, ASICs, programmable logic devices (FPGA, EPLD, etc.), and/or the like. Thus, some or all of the logic enabling or causing the performance of some or all of the operations described herein might be encoded in hardware or firmware circuitry (*e.g*., circuitry 1025) and executed directly by such circuitry, rather than being software instructions 1060 loaded into working memory 1020. (In some cases, this functionality can be embodied by hardware instructions). Thus, unless the context dictates otherwise, embodiments described herein are not limited to any specific combination of hardware, firmware, and/or software.

The communication interface 1035, can enable the device 1000 to communicate with other devices via a wired (*e.g*., electrical and/or optical) connection and/or a wireless (RF) connection. For example, the communication interface 1035 may include one or more RF subsystems (such a Bluetooth subsystem, such as those described above, for example, a Wi-Fi subsystem, a 5G or cellular subsystem, etc.). Some such systems can be implemented in combination, as discrete chips, as SoCs, and/or the like. The communication interface 1035 can further include a modem, a network interface card, and/or an antenna. In some cases, the communication interface 1035 might comprise a plurality of I/O ports, each of which can be any facility that provides communication between the device 1000 and other devices; in particular embodiments, such ports can be network ports, such as Ethernet ports, fiber ports, etc. Other embodiments can include different types of I/O ports, such as serial ports, pinouts, and/or the like. Depending on the nature of the device 1000, the communication interface 1035 can include any standard or proprietary components to allow communication as described in accordance with various embodiments.

In some embodiments, a processor 1010 will comprise one or more cores 1080, which can be considered the fundamental processing units within the processor 1010. In some embodiments, each core 1080 can include an arithmetic logic unit, which performs mathematical and/or logic operations, and a control unit, which directs the flow of data and controls overall operation of the core 1080. Each core 1080 can access data from memory 1020, perform the necessary computations, and store the results back into memory 1020 or registers 1085. In some embodiments, a core 1080 employs a pipeline architecture, which divides the instruction execution process into multiple stages and can allow the core to start working on a new instruction before finishing the previous one, significantly improving the throughput of the processor. Each core 1080 might have its own cache memory (not illustrated on Fig. 10), and in some embodiments, can support multithreading. In some embodiments, each core 1080 in a multi-core processor can communicate and/or coordinate with other cores 1080 using caches and/or interconnects. Some cores 1080 might be general-purpose cores, while other cores 1080 might perform specialized functions, such as floating-point operations, vector processing, cryptographic operations, and/or the like.

As noted above, a processor 1010 often comprises one or more registers 1085, which the skilled artisan will appreciate can store data used by the processor 1010 in executing instructions 1060b and/or performing operations. Registers 1085 can include general purpose registers or specialized registers. Some registers 1085 might store instructions that the processor 1010 is currently executing; these registers can include one or more instruction registers which can hold the opcode of the current instruction, a program counter, which points to the next instruction in sequence, etc. Some registers 1085 can also store addresses of instructions 1060b and/or data 1055b in the working memory 1020. Other registers 1085, such as a status register or flags register, can store operational status information that indicate various conditions, which can control program flow and/or execution.

In some embodiments, the device 1000 comprises a memory management unit (MMU) 1090, which can serve as an intermediary between the processor(s) 1010 and the memory 1020. In an aspect, the MMU 1090 can interact with the processor(s) 1010, *e.g.,* by intercepting memory access requests from the processor(s) 1010 and/or performing necessary translations and checks before forwarding the requests to the physical memory. The skilled artisan will appreciate that each storage location in the memory 1020 can be associated by a physical address, and inn some aspects, the MMU 1090 can provide virtual to physical address translation. In some embodiments, the MMU 1090 can also provide memory protection, *e.g*., preventing unauthorized access to certain memory locations; memory paging, which divides virtual address space into pages and corresponding physical memory addresses into frames and allows more efficient memory allocation and deallocation more efficiently; memory sharing and/or isolation between processes; and/or other features, such as address space layout randomization, memory, encryption, etc.

### Further Examples

The following examples described various features of certain embodiments. All such features of each example described below can be combined in any fashion, and different embodiments thus can include any set or subset of the features described below, as well as various features of the embodiments described above. No particular feature or set of features should be considered required by all embodiments. Conversely, some embodiments can combine some or all of these features in any manner understood, in light of this disclosure, by a skilled artisan.

A method in accordance with a set of embodiments might comprise managing, *e.g*., by a non-uniform memory access (NUMA) scheduler of a virtualization platform, placement of a plurality of virtual computing instances (VCI) collectively running on a plurality of NUMA nodes. In some embodiments, the plurality of VCls comprises a first VCI running on a first NUMA node and/or a second VCI running on a second NUMA node. In some embodiments, the virtualization platform abstracts hardware resources of a physical host computer for the plurality of NUMA nodes.

In some embodiments, the method comprises determining, *e.g*., by the NUMA scheduler, whether the first VCI is experiencing NUMA migration thrashing. In some embodiments, the method comprises, *e.g*., based on a first determination that the first VCI is experiencing NUMA migration thrashing, imposing a NUMA migration damper on the first VCI. In some embodiments, the NUMA migration damper prevents the first VCI from evaluation as a migration candidate.

In some embodiments, the method comprises repeating, by the NUMA scheduler, the operation of determining whether the first VCI is experiencing NUMA migration thrashing. In some embodiments, the method comprises, *e.g*., based on a second determination that the first VCI is not experiencing NUMA migration thrashing, removing the NUMA migration damper from the first VCI.

In some embodiments, the method comprises, *e.g*., based at least in part on a determination that the first VCI is not subject to the NUMA migration damper, evaluating the first VCI as a migration candidate for NUMA migration. In some embodiments, the method comprises, *e.g*., based in part on the evaluation of the first VCI as a NUMA migration candidate, migrating the first VCI to the second NUMA node.

In some embodiments, the method comprises storing an array of one or more timestamps of past migrations of the first VCI. In some embodiments, determining whether the first VCI is experiencing migration thrashing comprises comparing a number of past migrations occurring over a specified lookback period with a specified threshold number of migrations. In some embodiments, the number of past migrations comprises a number of past NUMA migrations but does not include a number of past load balancing migrations.

In some embodiments, the method comprises removing the NUMA migration damper from the first VCI after elapse of a specified cooldown period of time after imposing the NUMA migration damper. In some embodiments, a length of the specified cooldown period is determined based at least in part on a memory size of the first VCI.

A method in accordance with another set of embodiments might comprise managing, *e.g*., by a by a non-uniform memory access (NUMA) scheduler of a virtualization layer, placement of a plurality of virtual computing instances (VCI) collectively running on a plurality of NUMA nodes. In some embodiments, one or more of the VCls might be virtual machines (VM). In some embodiments, the virtualization layer abstracts hardware resources of one or more physical host computers for the plurality of NUMA nodes.

In some embodiments, the method comprises measuring, *e.g*., by the NUMA scheduler, values of processor load and processor capacity for at least the first NUMA node.

In some embodiments, the method comprises predicting, *e.g*., by the NUMA scheduler and/or based at least in part on output from a first dynamic model of NUMA node processor capacity, a predicted processor capacity of the first NUMA node. In some embodiments, the method comprises placing, *e.g.*, by NUMA scheduler and/or based at least in part on the predicted processor capacity of the second NUMA node, a first VCI on the first NUMA node. In some embodiments, placing the first VCI comprises migrating the first VCI from the second NUMA node to the first NUMA node.

In some embodiments, wherein the dynamic model is based at least in part on the measured values of processor load and processor capacity. In some embodiments, the predicted processor capacity of the first NUMA node is predicted capacity of the first NUMA node under circumstances in which the first NUMA node is subject to a predicted load that includes load imposed by the first VCI. In some embodiments, the first dynamic model is a machine learning (ML) model.

In some embodiments, the dynamic model is one of a plurality of dynamic models. In some embodiments, the plurality of dynamic models comprises the first dynamic model specific, which is specific to the first NUMA node and a second dynamic model specific to the second NUMA node. In some embodiments, the method further comprises measuring, over a first interval of time, a first plurality of sets of values of processor load and processor capacity of the first NUMA node. In some embodiments, the method further comprises measuring, over a second interval of time, a second plurality of sets of values of processor load and processor capacity of the second NUMA node. In some embodiments, the method further comprises dynamically updating the first dynamic model based on the first plurality of sets of values processor load and processor capacity. In some embodiments, the method further comprises dynamically updating the second dynamic model based on the second plurality of sets of values processor load and processor capacity.

In some embodiments, the first NUMA node runs on a first one or more hardware processors or hardware processor cores. In some embodiments, the second NUMA node runs on a second one or more hardware processors or hardware processor cores. In some embodiments, the first plurality of sets of values of processor load and processor capacity comprise sets of measured values of processor load and processor capacity of the first one or more hardware processors or hardware processor cores. In some embodiments, the second plurality of sets of values of processor load and processor capacity comprises sets of measured values of processor load and processor capacity of the second one or more hardware processors or hardware processor cores. In some embodiments, at least one set of values in the first plurality of sets of values comprises values of processor load and processor capacity measured when the first one or more hardware processors or hardware processor cores is subject to greater than 100% load. In some embodiments, at least one set of values in the second plurality of sets of values comprises values of processor load and processor capacity measured when the second one or more hardware processors or hardware processor cores is subject to greater than 100% load.

Another set of embodiments provides systems, including in particular computer systems. An exemplary computer system in accordance with some embodiments might comprise one or more processors. In some embodiments, the system might comprise one or more non-transitory computer-readable media having encoded therein instructions executable by the one or more processors to perform a variety of operations, some or all of the operations described in the context of the methods described above.

A further set of embodiments one or more non-transitory computer-readable media having encoded therein instructions executable by a computer system, and/or one or more processors, to perform a variety of operations, including without limitation some or all of the operations described in the context of the methods described above.

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the embodiments in general to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.), and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, software, or a combination of any of these. It will be apparent that systems and/or methods described herein may be implemented in different forms of hardware, firmware, and/or a combination of hardware and software. The actual specialized control hardware or software code used to implement these systems and/or methods does not limit any embodiments unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (e.g., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

. Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (e.g., related items, unrelated items, a combination of related and unrelated items, and/or the like), and may be used interchangeably with "one or more." Where only one item is intended, the phrase "only one" or similar language is used. As used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim; the disclosure of various implementations includes each dependent claim in combination with every other claim in the claim set. No element, act, or instruction used herein should be construed as critical or essential unless explicitly described as such.

## Claims

1. A method, comprising:
managing, by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
measuring, by the NUMA scheduler, values of processor load and processor capacity for at least the first NUMA node;
predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
placing, by the NUMA scheduler and based at least in part on the predicted processor capacity of the second NUMA node, a first VCI on the first NUMA node.

2. The method of claim 1, wherein the predicted processor capacity of the first NUMA node is a predicted processor capacity of the first NUMA node under circumstances in which the first NUMA node is subject to a predicted load that includes load imposed by the first VCI.

3. The method of any preceding claim, wherein:
the dynamic model is one of a plurality of dynamic models, the plurality of dynamic models comprising the first dynamic model specific to the first NUMA node and a second dynamic model specific to the second NUMA node; and
the method further comprises:
measuring, over a first interval of time, a first plurality of sets of values of processor load and processor capacity of the first NUMA node;
measuring, over a second interval of time, a second plurality of sets of values of processor load and processor capacity of the second NUMA node;
dynamically updating the first dynamic model based on the first plurality of sets of values processor load and processor capacity; and
dynamically updating the second dynamic model based on the second plurality of sets of values processor load and processor capacity.

4. The method of any preceding claim, wherein:
the first NUMA node runs on a first one or more hardware processors or hardware processor cores;
the second NUMA node runs on a second one or more hardware processors or hardware processor cores;
the first plurality of sets of values of processor load and processor capacity comprises sets of measured values of processor load and processor capacity of the first one or more hardware processors or hardware processor cores; and
the second plurality of sets of values of processor load and processor capacity comprises sets of measured values of processor load and processor capacity of the second one or more hardware processors or hardware processor cores.

5. The method of any preceding claim, wherein:
at least one set of values in the first plurality of sets of values comprises values of processor load and processor capacity measured when the first one or more hardware processors or hardware processor cores is subject to greater than 100% load; and
at least one set of values in the second plurality of sets of values comprises values of processor load and processor capacity measured when the second one or more hardware processors or hardware processor cores is subject to greater than 100% load.

6. The method of any preceding claim, wherein placing the first VCI comprises migrating the first VCI from the second NUMA node to the first NUMA node.

7. The method of any preceding claim, wherein the first dynamic model is a machine learning (ML) model.

8. One or more non-transitory computer-readable media having encoded therein instructions executable by one or more processors to perform operations comprising:
managing, by a by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
measuring, by the NUMA scheduler, values of processor load and processor capacity for at least the first NUMA node;
predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
placing, by the NUMA scheduler and based at least in part on the predicted processor capacity of the second NUMA node, a first VCI on the first NUMA node.

9. The one or more non-transitory computer-readable media of claim 8, wherein the predicted processor capacity of the first NUMA node is a predicted processor capacity of the first NUMA node under circumstances in which the first NUMA node is subject to a predicted load that includes load imposed by the first VCI.

10. The one or more non-transitory computer-readable media of claim 8 or 9, wherein:
the dynamic model is one of a plurality of dynamic models, the plurality of dynamic models comprising the first dynamic model specific to the first NUMA node and a second dynamic model specific to the second NUMA node; and
the operations further comprise:
measuring, over a first interval of time, a first plurality of sets of values of processor load and processor capacity of the first NUMA node;
measuring, over a second interval of time, a second plurality of sets of values of processor load and processor capacity of the second NUMA node;
dynamically updating the first dynamic model based on the first plurality of sets of values processor load and processor capacity; and
dynamically updating the second dynamic model based on the second plurality of sets of values processor load and processor capacity.

11. The one or more non-transitory computer-readable media of any preceding claim 8 to 10, wherein:
the first NUMA node runs on a first one or more hardware processors or hardware processor cores;
the second NUMA node runs on a second one or more hardware processors or hardware processor cores;
the first plurality of sets of values of processor load and processor capacity comprises sets of measured values of processor load and processor capacity of the first one or more hardware processors or hardware processor cores; and
the second plurality of sets of values of processor load and processor capacity comprises sets of measured values of processor load and processor capacity of the second one or more hardware processors or hardware processor cores.

12. A system, comprising:
one or more processors; and
one or more non-transitory computer-readable media having encoded therein instructions executable by the one or more processors to perform operations comprising:
managing, by a by a non-uniform memory access (NUMA) scheduler of a virtualization layer, placement of a plurality of virtual computing instances (VCI) collectively running on a plurality of NUMA nodes, the virtualization layer abstracting hardware resources of one or more physical host computers for the plurality of NUMA nodes;
measuring, by the NUMA scheduler, values of processor load and processor capacity for at least the first NUMA node;
predicting, by the NUMA scheduler and based at least in part on output from a first dynamic model of NUMA node processor capacity, a predicted processor capacity of the first NUMA node, wherein the dynamic model is based at least in part on the measured values of processor load and processor capacity; and
placing, by the NUMA scheduler and based at least in part on the predicted processor capacity of the second NUMA node, a first VCI on the first NUMA node.

13. The system of claim 12, wherein the predicted processor capacity of the first NUMA node is a predicted processor capacity of the first NUMA node under circumstances in which the first NUMA node is subject to a predicted load that includes load imposed by the first VCI.

14. The system of claim 12 or 13, wherein:
the dynamic model is one of a plurality of dynamic models, the plurality of dynamic models comprising the first dynamic model specific to the first NUMA node and a second dynamic model specific to the second NUMA node; and
the operations further comprise:
measuring, over a first interval of time, a first plurality of sets of values of processor load and processor capacity of the first NUMA node;
measuring, over a second interval of time, a second plurality of sets of values of processor load and processor capacity of the second NUMA node;
dynamically updating the first dynamic model based on the first plurality of sets of values processor load and processor capacity; and
dynamically updating the second dynamic model based on the second plurality of sets of values processor load and processor capacity.

15. The system of any preceding claim 12 to 14, wherein placing the first VCI comprises migrating the first VCI from the second NUMA node to the first NUMA node.
